# FASCICULE DE BREVET EUROPEEN

(11) **EP 1 176 082 B1**
(45) Date de publication et mention de la délivrance du brevet: **05.10.2005**
(21) Numéro de dépôt: 01401907.9
(22) Date de dépôt: 13.07.2001
(51) Int. Cl.: B62D 1/19, B60R 21/01

(54) **Dispositif d'absorption d'énergie modulable à charges pyrotechniques suivant l'axe d'une colonne de direction de véhicule automobile**
Pyrotechnisch einstellbare Energieabsorptionseinrichtung längs der Achse einer Kraftfahrzeuglenksäule
Pyrotechnically adjustable energy absorbing device along the axis of a motor vehicle steering column

(30) Priorité: 26.07.2000 FR 0009815
(43) Date de publication de la demande: 30.01.2002
(73) Titulaire: NACAM France S.A., F-41100 Vendôme (FR)
(72) Inventeur: Ben Rhouma, Abdel Karim, 41100 Vendome (FR); Duval, Benoît, 41100 Vendome (FR); Badaire, Philippe, 41800 Montoire (FR); Antigny, Sylvain, 37160 Buxeuil (FR)
(74) Mandataire: Chassagnon, Jean-Alain

(56) Documents cités:
- EP-A- 1 018 463
- EP-A- 1 101 687
- DE-A- 4 005 259
- US-A- 5 609 364

## Description

La présente invention se rapporte à un dispositif d'absorption d'énergie modulable pour colonne de direction de véhicule automobile, ce dispositif d'absorption agit directement suivant l'axe de la colonne de direction et met en oeuvre des charges pyrotechniques. Un dispositif ayant les caractéristiques selon le préambule de la revendication 1 est connu du brevet US-A-5 609 364.

Le dispositif selon l'invention s'applique notamment à une colonne de direction réglable en profondeur ou en inclinaison ou bien à une colonne de direction réglable en profondeur et en inclinaison, dont l'arbre de direction est monté dans un tube-corps, qui est supporté et bloqué sur la carrosserie à la position voulue. La colonne de direction comprend un arbre de direction monté tournant dans un tube-corps, qui est relié à un ensemble support fixé au châssis du véhicule ou à un élément de la carrosserie. L'invention peut s'appliquer également à une colonne de direction non réglable ; dans ce cas, le tube-corps est monté directement dans l'ensemble support.

L'amélioration croissante de la sécurité sur les colonnes de direction demande aux constructeurs de maîtriser tous les paramètres des systèmes d'absorption d'énergie. Ainsi, en ce qui concerne le procédé d'absorption d'énergie au moyen de déroulement d'un fil, qui est de plus en plus sollicité sur les colonnes de direction, il est envisagé de moduler cette absorption d'énergie suivant les caractéristiques du conducteur tel que notamment le poids du conducteur et le fait qu'il ait attaché sa ceinture ou non, la position du conducteur par rapport au volant ainsi que la vitesse du véhicule, qui agissent sur le volant en cas de choc.

Le but de la présente invention est de proposer un dispositif d'absorption d'énergie modulable, qui agit directement selon l'axe de la colonne de direction et qui mette en oeuvre des fils de forme simple et facile à réaliser, tout en permettant d'absorber de façon quantifiée tout ou partie de l'énergie à dissiper qui est demandée et qui tient compte des caractéristiques du conducteur et du véhicule, tout en se montant facilement dans l'encombrement des colonnes de direction existantes.

Selon un mode de réalisation, l'invention se rapporte à un dispositif d'absorption modulable d'énergie d'une colonne de direction de véhicule automobile, qui comprend un arbre de direction monté tournant dans un tube corps autour d'un axe de direction. Le tube-corps est relié à un ensemble support qui est fixé au châssis du véhicule.

Un élément support fixe est solidaire du châssis du véhicule, et un élément support mobile est relié à l'élément support fixe afin de constituer l'ensemble support. L'élément support mobile est relié et bloqué sur l'élément support fixe à une valeur déterminée afin que ce blocage cesse en cas de choc.

Deux enroulements sont obtenus à partir d'un élément métallique de section déterminée. Les deux enroulements sont reliés à l'élément support fixe et à l'élément support mobile. Un des deux enroulements est disposé d'un côté du plan vertical passant par l'axe de direction, et l'autre enroulement est disposé de l'autre côté dudit plan vertical passant par l'axe de direction.

Chaque enroulement est raccordé à l'élément support fixe par un axe de liaison qui est constitué par une tige de maintien. Chaque enroulement est raccordé à l'élément support mobile par un axe de liaison qui est constitué par une tige de maintien.

Chaque enroulement est monté sur un rouleau qui est disposé sur un axe de tenue constituant l'axe de liaison avec l'un des deux éléments supports. Chaque enroulement est muni d'une portion rectiligne qui a sensiblement la même direction que l'effort à amortir, chaque portion rectiligne se prolongeant par une extrémité libre qui s'amarre à un axe d'accrochage constituant l'axe de liaison avec l'autre élément support.

Chaque enroulement a un de ses deux axes de liaison qui est constitué par une tige de maintien mobile suivant son axe par l'intermédiaire de moyens de déplacement pyrotechniques qui sont mis en action par des moyens de commande.

En cas de choc et suivant la valeur des paramètres retenus, l'élément support mobile est relié à l'élément support fixe par un nombre voulu d'enroulements, qui peut être déterminé suivant certaines caractéristiques du conducteur, sa position par rapport au volant, le fait qu'il ait attaché sa ceinture ou non, ainsi que suivant la vitesse du véhicule. Ainsi l'élément support mobile, relié au tube-corps donc au volant se déplace par rapport à l'élément support fixe suivant l'axe de direction en absorbant tout ou partie de l'énergie à dissiper demandée.

Les moyens de commande de déplacement pyrotechnique sont agencés de manière qu'en cas de choc, l'élément support mobile soit relié à l'élément support fixe :
- par les deux enroulements, ou
- par l'un des deux enroulements, ou
- par l'autre enroulement, ou
- par aucun enroulement
de façon que l'élément support mobile relié au tube-corps donc au volant se déplace par rapport à l'élément support fixe suivant l'axe de direction en absorbant tout ou partie de l'énergie à dissiper demandée.

Selon un autre mode de réalisation de l'invention, un enroulement d'un élément métallique de section déterminée, est relié à l'élément support fixe et à l'élément support mobile. Ledit enroulement est disposé d'un côté du plan vertical passant par l'axe de direction. Les moyens de commande de déplacement pyrotechnique sont agencés de manière qu'en cas de choc, et suivant la valeur des paramètres retenus, l'élément support mobile soit relié à l'élément support fixe :
- par un enroulement, ou
- par aucun enroulement.

Dans certaines réalisations de l'invention, l'axe de tenue de chacun des deux enroulements est disposé dans l'élément support fixe, et l'axe d'accrochage de chacun des deux enroulements est disposé dans l'élément support mobile.

Dans d'autres réalisations de l'invention, l'axe de tenue de chacun des deux enroulements est disposé dans l'élément support mobile, et l'axe d'accrochage de chacun des deux enroulements est disposé dans l'élément support fixe.

Selon différentes architectures possibles de l'invention, chaque enroulement a ses deux axes de liaison qui sont sensiblement parallèles l'un par rapport à l'autre.

Selon un type de structure, les deux axes de liaison de chacun des deux enroulements sont dans un plan vertical. Les deux axes de liaison sont sensiblement parallèles l'un par rapport à l'autre, et ils sont sensiblement perpendiculaires à l'axe de direction.

Selon un autre type de structure, les deux axes de liaison de chacun des deux enroulements sont sensiblement horizontaux, et ils sont sensiblement perpendiculaires au plan vertical passant par l'axe de direction.

Selon d'autres différentes architectures possibles de l'invention, chaque enroulement a ses deux axes de liaison qui sont sensiblement perpendiculaires l'un par rapport à l'autre.

Selon un type de structure, les axes de tenue des deux enroulements sont chacun dans un plan vertical. Les axes de tenue sont sensiblement parallèles l'un par rapport à l'autre, et ils sont sensiblement perpendiculaires à l'axe de direction. Les axes d'accrochage des deux enroulements sont sensiblement horizontaux, et ils sont sensiblement perpendiculaires au plan vertical passant par l'axe de direction.

Selon un autre type de structure, les axes de tenue des deux enroulements sont sensiblement horizontaux, et ils sont sensiblement perpendiculaires au plan vertical passant par l'axe de direction. Les axes d'accrochage des deux enroulements sont chacun dans un plan vertical. Les axes d'accrochage sont sensiblement parallèles l'un par rapport à l'autre, et ils sont sensiblement perpendiculaires à l'axe de direction.

Dans deux types de structure détaillée de l'invention :
- l'élément support fixe est constitué par deux embases qui sont solidaires du châssis,
- l'élément support mobile comporte deux portions latérales et une portion de raccordement, chaque portion latérale se prolonge à l'extérieur par une embase mobile munie d'un logement dans lequel vient s'encastrer l'embase fixe correspondante de l'élément support fixe, ladite embase mobile est reliée et bloquée dans l'embase fixe à une valeur déterminée afin que ce blocage cesse en cas de choc ; le logement de l'embase mobile et l'embase fixe sont aménagés pour faciliter le montage et le dégagement en cas de choc ;
- un enroulement est disposé à l'extérieur de chaque portion latérale, chaque enroulement ayant ses deux axes de liaison qui sont perpendiculaires l'un par rapport à l'autre.

Le premier type de structure détaillée consiste en ce que :
- chaque enroulement est monté sur un rouleau disposé autour de l'axe de tenue, qui est l'axe de liaison avec l'embase fixe correspondante, ledit axe de tenue est dans un plan vertical et est sensiblement perpendiculaire à l'axe de direction ;
- chaque enroulement est muni d'une portion rectiligne ayant sensiblement la même direction que l'effort à amortir, chaque portion rectiligne se prolongeant par une extrémité libre recourbée autour de l'axe d'accrochage, qui est l'axe de liaison avec la portion latérale correspondante, ledit axe d'accrochage est sensiblement horizontal, et est sensiblement perpendiculaire au plan vertical passant par l'axe de direction ;
- l'axe d'accrochage est constitué par une tige de maintien mobile suivant son axe, par l'intermédiaire de moyens de déplacement pyrotechniques qui sont mis en action par des moyens de commande ;
- l'axe de tenue de chacun des deux enroulement est constituée par une tige de maintien fixe.

Le deuxième type de structure détaillée consiste en ce que :
- chaque enroulement est monté sur un rouleau disposé autour de l'axe de tenue, qui est l'axe de liaison avec la portion latérale correspondante, ledit axe de tenue est sensiblement horizontal, et est sensiblement perpendiculaire au plan vertical passant par l'axe de direction ;
- chaque enroulement est muni d'une portion rectiligne ayant sensiblement la même direction que l'effort à amortir, chaque portion rectiligne se prolongeant par une extrémité libre recourbée autour de l'axe d'accrochage, qui est l'axe de liaison avec l'embase fixe correspondante, ledit axe d'accrochage est dans un plan vertical et est sensiblement perpendiculaire à l'axe de direction ;
- l'axe de tenue est constitué par une tige de maintien mobile suivant son axe, par l'intermédiaire de moyens de déplacement pyrotechniques qui sont mis en action par des moyens de commande ;
- l'axe d'accrochage de chacun des deux enroulements est constitué par une tige de maintien fixe.

Dans deux autres types de structure détaillée de l'invention :
- l'élément support fixe est constitué par une embase qui est solidaire du châssis, ladite embase se prolongeant de chaque côté par une portion latérale sensiblement verticale ;
- l'élément support mobile comporte deux portions latérales et une portion de raccordement, chaque portion latérale mobile est munie d'un logement dans lequel vient s'encastrer la portion latérale fixe correspondante de l'élément support fixe, ladite portion latérale mobile est reliée et bloquée dans la portion latérale fixe à une valeur déterminée afin que ce blocage cesse en cas de choc ; le logement de la portion latérale mobile et la portion latérale fixe sont aménagés pour faciliter le montage et le dégagement en cas de choc ;
- un enroulement est disposé à l'extérieur de chaque portion latérale fixe, chaque enroulement ayant ses deux axes de liaison qui sont parallèles l'un par rapport à l'autre.

Le premier type de structure détaillée consiste en ce que :
- chaque enroulement est monté sur un rouleau disposé autour de l'axe de tenue, qui est l'axe de liaison avec la portion latérale fixe correspondante, ledit axe de tenue est sensiblement horizontal, et est sensiblement perpendiculaire au plan vertical passant par l'axe de direction ;
- chaque enroulement est muni d'une portion rectiligne ayant sensiblement la même direction que l'effort à amortir, chaque portion rectiligne se prolongeant par une extrémité libre recourbée autour de l'axe d'accrochage, qui est l'axe de liaison avec la portion latérale mobile correspondante, ledit axe d'accrochage est sensiblement horizontal et est sensiblement perpendiculaire au plan vertical passant par l'axe de direction ;
- l'axe d'accrochage est constitué par une tige de maintien mobile suivant son axe, par l'intermédiaire de moyens de déplacement pyrotechniques qui sont mis en action par des moyens de commande ;
- l'axe de tenue de chacun des deux enroulements est constitué par une tige de maintien fixe.

Le deuxième type de structure détaillée consiste en ce que :
- chaque enroulement est monté sur un rouleau disposé autour de l'axe de tenue, qui est l'axe de liaison avec la portion latérale mobile correspondante, ledit axe de tenue est sensiblement horizontal, et est sensiblement perpendiculaire au plan vertical passant par l'axe de direction ;
- chaque enroulement est muni d'une portion rectiligne ayant sensiblement la même direction que l'effort à amortir, chaque portion rectiligne se prolongeant par une extrémité libre recourbée autour de l'axe d'accrochage, qui est l'axe de liaison avec la portion latérale fixe correspondante, ledit axe d'accrochage est sensiblement horizontal, et est sensiblement perpendiculaire au plan vertical passant par l'axe de direction ;
- l'axe de tenue est constitué par une tige de maintien mobile suivant son axe, par l'intermédiaire de moyens de déplacement pyrotechniques qui sont mis en action par des moyens de commande ;
- l'axe d'accrochage de chacun des deux enroulements est constitué par une tige de maintien fixe.

Dans deux autres types de structure détaillée de l'inventeur :
- l'élément support fixe est constitué par deux embases qui sont solidaires du châssis,
- l'élément support mobile comporte deux portions latérales et une portion de raccordement, chaque portion latérale se prolonge à l'extérieur par une embase mobile munie d'un logement dans lequel vient s'encastrer l'embase fixe correspondante de l'élément support fixe, ladite embase mobile est reliée et bloquée dans l'embase fixe à une valeur déterminée afin que ce blocage cesse en cas de choc ; le logement de l'embase mobile et l'embase fixe sont aménagés pour faciliter le montage et le dégagement en cas de choc ;
- un enroulement est disposé à l'extérieur de chaque portion latérale, chaque enroulement ayant ses deux axes de liaison qui sont parallèles l'un par rapport à l'autre.

Le premier type de structure détaillée consiste en ce que :
- chaque enroulement est monté sur un rouleau disposé autour de l'axe de tenue, qui est l'axe de liaison avec l'embase fixe correspondante, ledit axe de tenue est dans un plan vertical et est sensiblement perpendiculaire à l'axe de direction ;
- chaque enroulement est muni d'une portion rectiligne ayant sensiblement la même direction que l'effort à amortir, chaque portion rectiligne se prolongeant par une extrémité libre recourbée autour de l'axe d'accrochage, qui est l'axe de liaison avec l'embase mobile correspondante, ledit axe d'accrochage est dans un plan vertical et est sensiblement perpendiculaire à l'axe de direction ;
- l'axe d'accrochage est constitué par une tige de maintien mobile suivant son axe, par l'intermédiaire de moyens de déplacement pyrotechniques qui sont mis en action par des moyens de commande ;
- l'axe de tenue de chacun des deux enroulements est constitué par une tige de maintien fixe.

Le deuxième type de structure détaillée consiste en ce que :
- chaque enroulement est monté sur un rouleau disposé autour de l'axe de tenue, qui est l'axe de liaison avec l'embase mobile correspondante, ledit axe de tenue est dans un plan vertical et est sensiblement perpendiculaire à l'axe de direction ;
- chaque enroulement est muni d'une portion rectiligne ayant sensiblement la même direction que l'effort à amortir, chaque portion rectiligne se prolongeant par une extrémité libre recourbée autour de l'axe d'accrochage, qui est l'axe de liaison avec l'embase fixe correspondante, ledit axe d'accrochage est dans un plan vertical et est sensiblement perpendiculaire à l'axe de direction ;
- l'axe de tenue est constitué par une tige de maintien mobile suivant son axe, par l'intermédiaire de moyens de déplacement pyrotechniques qui sont mis en action par des moyens de commande ;
- l'axe d'accrochage de chacun des deux enroulements est constitué par une tige de maintien fixe.

Le dispositif d'absorption d'énergie modulable selon l'invention présente ainsi l'avantage d'avoir une structure simple à réaliser, avec une garantie de qualité de fabrication lorsqu'elle est réalisée en très grande série, comme c'est le cas de l'industrie automobile. De plus, le dispositif s'adapte facilement à l'encombrement des colonnes de direction existantes. Enfin, le dispositif d'absorption d'énergie modulable permet d'adapter l'absorption d'énergie à tout ou partie de celle demandée, en tenant compte notamment du poids du conducteur, et de sa position par rapport au volant, de la ceinture de sécurité et de la vitesse du véhicule tout en préservant une même course de déroulement.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue de dessus en perspective d'une colonne de direction de véhicule automobile, qui est équipée d'un dispositif d'absorption d'énergie modulable suivant l'axe de ladite colonne ;
- la figure 2 est une vue de dessus en perspective de la colonne de direction de la figure 1, dans sa position après un choc ;
- la figure 3 est une vue de dessous partielle de la figure 1 ;
- la figure 4 est une coupe partielle suivant IV-IV de la figure 3 ;
- la figure 5 est une vue de dessous en perspective d'un autre mode de réalisation de l'invention ;
- la figure 6 est une vue partielle en perspective d'un autre mode de réalisation de l'invention avec les axes de liaison perpendiculaires à l'axe de direction ;
- la figure 7 est une vue analogue à la figure 6 d'un autre mode de réalisation de l'invention avec les axes de liaison perpendiculaires à l'axe de direction ;
- la figure 8 est une vue partielle en perspective d'un autre mode de réalisation de l'invention avec les axes de liaison horizontaux ;
- la figure 9 est une vue analogue à la vue 8 d'un autre mode de réalisation de l'invention avec les axes de liaison horizontaux ;
- la figure 10A est une vue d'un enroulement à axes de liaison parallèles selon l'invention ;
- la figure 10B est une vue suivant XB de la figure 10A ;
- la figure 11A est une vue d'un enroulement à axes de liaison perpendiculaires selon l'invention ;
- la figure 11B est une vue suivant XIB de la figure 11A.

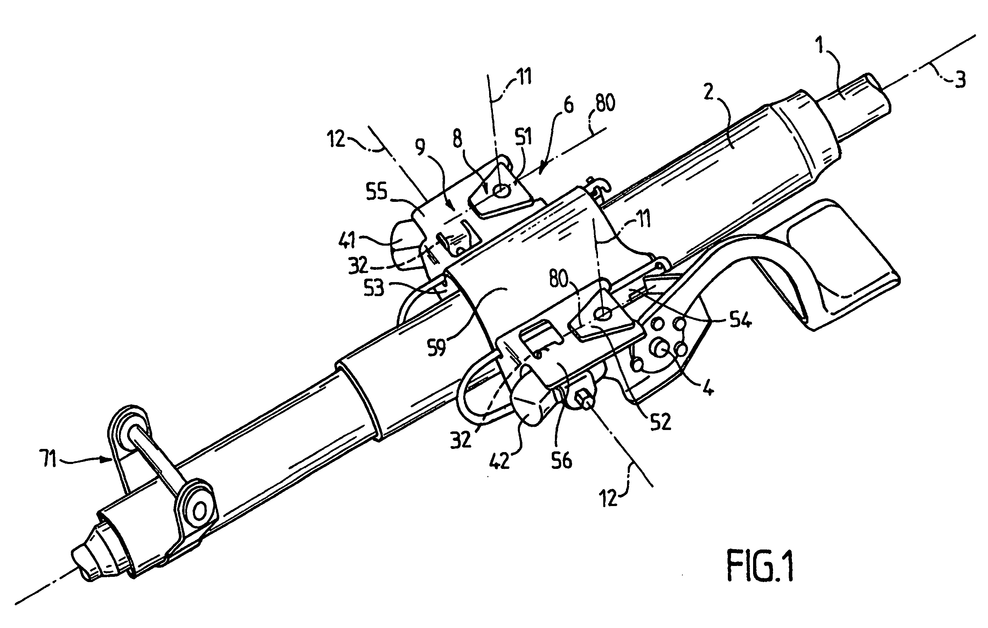

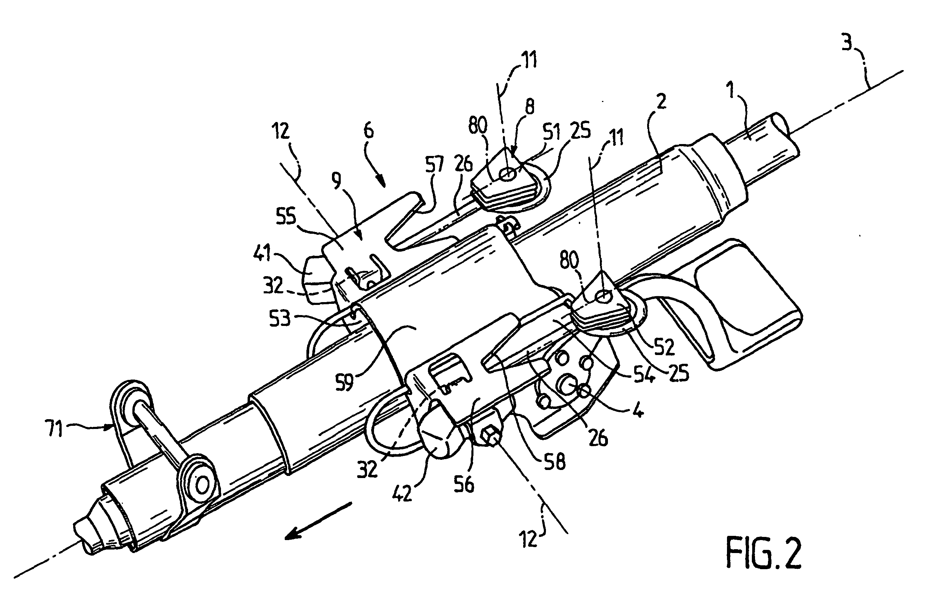

Comme on peut le voir sur les figures 1, 2, 5 et 8, la colonne de direction de véhicule automobile comprend un arbre de direction 1 qui est monté tournant dans un tube-corps 2 autour d'un axe de direction 3, comme cela est représenté sur les figures 1 et 2. Le tube-corps 2 est relié à un ensemble support 6 par un système de réglage en position 4 en profondeur ou en inclinaison, ou par un système de réglage 4 en profondeur et en inclinaison. L'invention peut s'appliquer également à une colonne de direction non réglage, dans ce cas le tube-corps 2 est relié directement à l'ensemble support 6.

L'ensemble support 6 comprend un élément support fixe 8 et un élément support mobile 9. L'élément support fixe 8 est solidaire du châssis 10 du véhicule ou d'un élément de carrosserie. L'élément support mobile 9 est relié au tube-corps 2 par le système de réglage en position 4. L'élément support mobile 9 est relié à l'élément support fixe 8, et ledit élément support mobile 9 est bloqué sur ledit élément support fixe à une valeur déterminée, qui tient compte du choc à absorber afin de permettre dans ce cas à l'élément support mobile 9 de coulisser dans l'élément support fixe 8.

L'ensemble support 6 est l'ensemble de fixation supérieure de la colonne de direction. Un ensemble de fixation inférieure 71 de la colonne de direction comporte un axe d'articulation horizontal, qui permet le réglage en hauteur de ladite colonne.

Dans la suite de la description et pour un même élément, on appellera interne ou intérieur par rapport à l'axe de direction 3, ce qui est le plus près de cet axe de direction 3,et externe ou extérieur ce qui est le plus éloigné dudit axe.

On appellera plan vertical : un plan qui est parallèle au plan vertical passant par l'axe de direction. On appellera horizontal : un axe ou un élément qui est perpendiculaire au plan vertical passant par l'axe de direction.

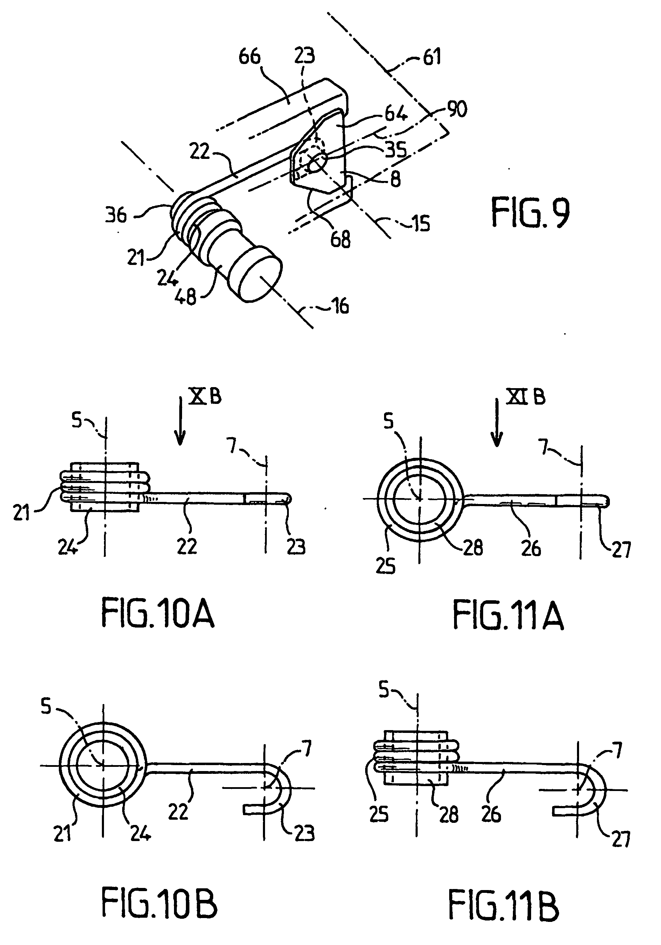

Selon l'invention, le dispositif d'absorption modulable d'énergie comporte un seul ou deux enroulements d'un élément métallique de section déterminée. Chaque enroulement consiste en un ensemble de spires avec un système d'accrochage. Les spires sont montées autour d'un axe, qui est appelé axe de tenue, et le système d'accrochage est aménagé autour d'un axe qui est appelé axe d'accrochage. L'enroulement ou les deux enroulements ont une structure référencée 21, qui est représentée sur les figures 10A-10B ou une structure référencée 25, qui est représentée sur les figures 11A-11B.

Dans le cas des figures 10A et 10B, l'enroulement 21 est muni d'une portion rectiligne 22 qui a sensiblement la même direction que l'effort à amortir, la portion rectiligne 22 se prolongeant par une extrémité libre 23. Les spires de l'enroulement 21 sont montées sur un rouleau 24 qui est disposé sur un axe qui est l'axe de tenue 5 de l'enroulement 21. Le système d'accrochage est l'extrémité libre 23 recourbée autour d'un axe, qui est l'axe d'accrochage 7 de l'enroulement 21. L'enroulement 21 a son axe de tenue 5 et son axe d'accrochage 7 qui sont sensiblement parallèles l'un par rapport à l'autre.

Dans le cas des figures 11A et 11B, l'enroulement 25 est muni d'une portion rectiligne 26 qui a sensiblement la même direction que l'effort à amortir, la portion rectiligne 26 se prolongeant par une extrémité libre 27. Les spires de l'enroulement 25 sont montées sur un rouleau 28 qui est disposé sur un axe qui est l'axe de tenue 5 de l'enroulement 25. Le système d'accrochage est l'extrémité libre 27, recourbée autour d'un axe, qui est l'axe d'accrochage 7 de l'enroulement 25. L'enroulement 25 a son axe de tenue 5 et son axe d'accrochage 7 qui sont sensiblement perpendiculaires l'un par rapport à l'autre.

Quelque soit la structure de l'enroulement, l'axe de tenue 5 et l'axe d'accrochage 7 ont toujours la même référence fonctionnelle.

Les deux enroulement 21 ou 25 sont reliés à l'élément support fixe 8 et à l'élément support mobile 9. Un des deux enroulements 21 ou 25 est disposé d'un côté du plan vertical passant par l'axe de direction 3, et l'autre enroulement est disposé de l'autre côté dudit plan vertical passant par l'axe de direction 3.

Chaque enroulement 21 ou 25 est raccordé à l'élément support fixe 8 par un axe de liaison, qui est constitué par une tige de maintien.

Chaque enroulement 21 ou 25 est raccordé à l'élément support mobile 9 par un axe de liaison, qui est constitué par une tige de maintien.

L'axe de tenue 5 et l'axe d'accrochage 7 de chacun des enroulements 21 ou 25 constituent l'axe de liaison avec l'un des éléments support fixe 8 ou mobile 9.

De plus suivant une caractéristique de l'invention, chacun des deux enroulements 21 ou 25 a un de ses deux axes de liaison, qui est constitué par une tige de maintien mobile suivant son axe. Ce sont des moyens de déplacement pyrotechniques qui agissent sur la tige de maintien mobile. Ces moyens de déplacement pyrotechniques sont mis en action par des moyens de commande.

Les moyens de commandes sont agencés de manière qu'en cas de choc, et suivant la valeur des paramètres extérieurs retenus, l'élément support mobile 9 soit relié à l'élément support fixe 8 par un nombre voulu d'enroulements 21 ou 25, de façon que l'élément support mobile 9 relié au tube-corps 2 donc au volant se déplace par rapport à l'élément support fixe 8 suivant l'axe de direction et en absorbant tout ou partie de l'énergie à dissiper demandée.

Plus précisément, les moyens de commande de déplacement pyrotechnique sont agencés de manière qu'en cas de choc, l'élément support mobile 9 soit relié à l'élément support fixe 8 :
- par les deux enroulements 21 ou 25, ou
- par l'un des deux enroulements 21 ou 25, ou
- par l'autre enroulement 21 ou 25, ou
- par aucun enroulement
de façon que l'élément support mobile 9 relié au tube-corps 2 donc au volant se déplace par rapport à l'élément support fixe 8 en absorbant tout ou partie de l'énergie à dissiper demandée.

Le dispositif d'absorption modulable d'énergie peut également comporter un seul enroulement 21 ou 25 qui est disposé d'un côté du plan vertical passant par l'axe de direction 3. Dans ce cas, l'enroulement 21 ou 25 est monté de la même façon que chaque enroulement du dispositif à deux enroulements. Avec un seul enroulement, les moyens de commande de déplacement pyrotechnique sont agencés de manière qu'en cas de choc, l'élément support mobile 9 soit relié à l'élément support fixe 8 :
- par l'enroulement 21 ou 25, ou
- par aucun enroulement
de façon que l'élément support mobile 9 relié au tube-corps 2 donc au volant se déplace par rapport à l'élément support fixe 8 en absorbant tout ou partie de l'énergie à dissiper demandée.

Selon l'agencement de chacun des deux enroulements 21 ou 25, l'axe de tenue 5 de chacun des deux enroulements 21 ou 25 est disposé dans l'élément support fixe 8 ; et l'axe d'accrochage 7 de chacun des deux enroulements 21 ou 25 est disposé dans l'élément support mobile 9.

Selon un autre agencement de chacun des deux enroulements 21 ou 25, l'axe de tenue 5 de chacun des deux enroulements 21 ou 25 est disposé dans l'élément support mobile 9, et l'axe d'accrochage 7 de chacun des deux enroulements 21 ou 25 est disposé dans l'élément support fixe 8.

Dans le cas du montage de deux enroulements 21, les deux axes de liaison c'est-à-dire l'axe de tenue 5 et l'axe d'accrochage 7 de chacun des deux enroulements 21 sont dans un plan vertical. De plus, ils sont sensiblement parallèles l'un par rapport à l'autre, et ils sont sensiblement perpendiculaires à l'axe de direction 3.

Dans un autre cas du montage de deux enroulements 21, les deux axes de liaison c'est-à-dire l'axe de tenue 5 et l'axe d'accrochage 7 de chacun des deux enroulements 21 sont sensiblement horizontaux. De plus, ils sont sensiblement perpendiculaires au plan vertical passant par l'axe de direction 3.

Dans le cas du montage de deux enroulements 25, les axes de tenue 5 des deux enroulements 25 sont chacun dans un plan vertical. De plus, ils sont sensiblement parallèles l'un par rapport à l'autre, et ils sont sensiblement perpendiculaires à l'axe de direction 3. Les axes d'accrochage 7 des deux enroulements 25 sont sensiblement horizontaux. De plus, ils sont sensiblement perpendiculaires au plan vertical passant par l'axe de direction 3.

Dans un autre cas du montage de deux enroulements 25, les axes de tenue 5 des deux enroulements 25 sont sensiblement horizontaux. De plus, ils sont sensiblement perpendiculaires au plan vertical passant par l'axe de direction 3. Les axes d'accrochage 7 des deux enroulements 25 sont chacun dans un plan vertical. De plus, ils sont sensiblement parallèles l'un par rapport à l'autre, et ils sont sensiblement perpendiculaires à l'axe de direction 3.

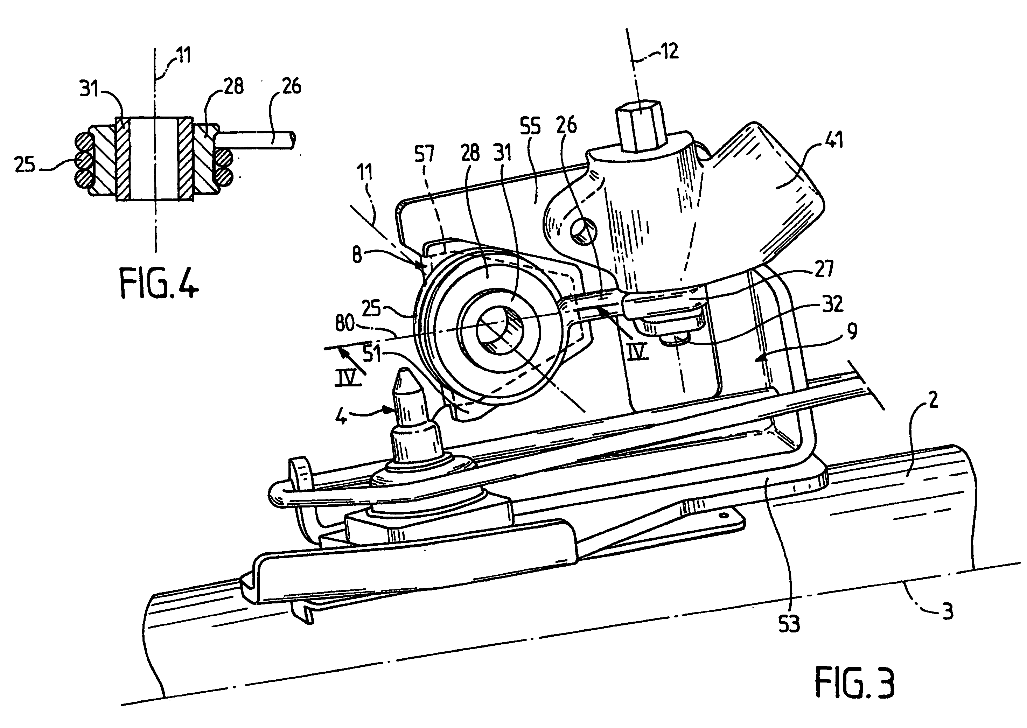

Le dispositif d'absorption modulable d'énergie suivant l'axe d'une colonne de direction selon l'invention, qui est représenté sur les figures 1, 2, 3 et 4, comporte un élément support fixe 8 et un élément support mobile 9.

L'élément support fixe 8 est constitué par deux embases 51, 52 qui sont solidaires du châssis 10.

Lesdites embases 51 et 52 sont disposées dans un plan, qui est sensiblement parallèle à l'axe de direction 3, et qui est sensiblement perpendiculaire au plan vertical passant par l'axe de direction 3.

L'élément support mobile 9 comporte deux portions latérales 53 et 54 sensiblement verticales et une portion de raccordement 59. Chaque portion latérale 53 et 54 se prolonge à l'extérieur par une embase mobile correspondante 55 et 56. Lesdites embases mobiles 55 et 56 sont disposées dans un plan, qui est sensiblement parallèle à l'axe de direction 3, et qui est sensiblement perpendiculaire au plan vertical passant par l'axe de direction 3. Chaque embase mobile 55, 56 est munie d'un logement 57, 58 dans lequel vient s'encastrer l'embase fixe 51, 52 correspondante de l'élément support fixe 8. Chaque embase mobile 55 et 56 est reliée et bloquée dans l'embase fixe correspondante 51, 52 à une valeur déterminée afin que ce blocage cesse en cas de choc. Le logement 57 et 58 de l'embase mobile correspondante 55 et 56 et l'embase fixe correspondante 51, 52 sont aménagés pour faciliter le montage et le dégagement en cas de choc, qui s'effectue suivant l'axe commun 80 du logement 57, 58 et de l'embase fixe correspondante 51, 52 ; ledit axe 80 étant dans un plan vertical et étant sensiblement parallèle à l'axe de direction 3.

Un enroulement 25 est disposé à l'extérieur de chaque portion latérale 53 et 54. Chaque enroulement 25 a ses deux axes de liaison 11 et 12 qui sont perpendiculaires l'un par rapport à l'autre.

Chaque enroulement 25 est monté sur un rouleau 28 disposé autour de l'axe de tenue 5, qui est l'axe de liaison 11 avec l'embase fixe 51, 52 correspondante. Ledit axe de tenue 5 est dans un plan vertical et est sensiblement perpendiculaire à l'axe de direction 3.

Chaque enroulement 25 est muni d'une portion rectiligne 26, qui a sensiblement la même direction que l'effort à amortir. Chaque portion rectiligne 26 se prolonge par une extrémité libre 27 recourbée autour de l'axe d'accrochage 7, qui est l'axe de liaison 12 avec la portion latérale 53, 54 correspondante. Ledit axe d'accrochage 7 est sensiblement horizontal, et est sensiblement perpendiculaire au plan vertical passant par l'axe de direction 3.

L'axe d'accrochage 7 de chacun des enroulements 25 est constitué par une tige de maintien 32 mobile suivant son axe, par l'intermédiaire de moyens de déplacement pyrotechniques 41, 42, qui sont mis en action par des moyens de commande, selon la valeur des paramètres extérieurs retenus.

L'axe de tenue 5 de chacun des enroulements 25 est constitué par une tige de maintien fixe 31.

La réalisation représentée sur les figures 1 à 4 peut s'appliquer à un montage avec un seul enroulement 21 ou 25.

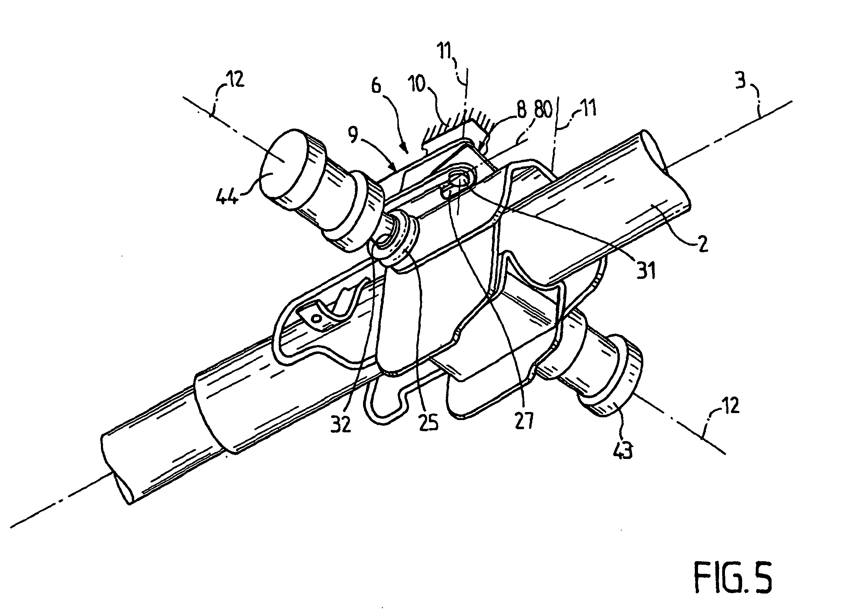

Le dispositif d'absorption modulable d'énergie suivant l'axe d'une colonne de direction selon l'invention, qui est représenté sur la figure 5 comporte un élément support fixe 8 et un élément mobile 9.

L'élément support fixe 8 est constitué par deux embases 51, 52 qui sont solidaires du châssis 10.

Lesdites embases 51 et 52 sont disposées dans un plan, qui est sensiblement parallèle à l'axe de direction 3, et qui est sensiblement perpendiculaire au plan vertical passant par l'axe de direction 3.

L'élément support mobile 9 comporte deux portions latérales 53 et 54 sensiblement verticales et une portion de raccordement 59. Chaque portion latérale 53 et 54 se prolonge à l'extérieur par une embase mobile correspondante 55 et 56. Lesdites embases mobiles 55 et 56 sont disposées dans un plan, qui est sensiblement parallèle à l'axe de direction 3, et qui est sensiblement perpendiculaire au plan vertical passant par l'axe de direction 3. Chaque embase mobile 55, 56 est munie d'un logement 57, 58 dans lequel vient s'encastrer l'embase fixe 51, 52 correspondante de l'élément support fixe 8. Chaque embase mobile 55 et 56 est reliée et bloquée dans l'embase fixe correspondante 51, 52 à une valeur déterminée afin que ce blocage cesse en cas de choc. Le logement 57 et 58 de l'embase mobile correspondante 55 et 56 et l'embase fixe correspondante 51, 52 sont aménagés pour faciliter le montage et le dégagement en cas de choc, qui s'effectue suivant l'axe commun 80 du logement 57, 58 et de l'embase fixe correspondante 51, 52 ; ledit axe 80 étant dans un plan vertical et étant sensiblement parallèle à l'axe de direction 3.

Un enroulement 25 est disposé à l'extérieur de chaque portion latérale 53 et 54. Chaque enroulement 25 a ses deux axes de liaison 11 et 12 qui sont perpendiculaires l'un par rapport à l'autre.

Chaque enroulement 25 est monté sur un rouleau 28 disposé autour de l'axe de tenue 5, qui est l'axe de liaison 12 avec la portion latérale 53, 54 correspondante. Ledit axe de tenue 5 est sensiblement horizontal, et est sensiblement perpendiculaire au plan vertical passant par l'axe de direction 3.

Chaque enroulement 25 est muni d'une portion rectiligne 26, qui a sensiblement la même direction que l'effort à amortir. Chaque portion rectiligne 26 se prolonge par une extrémité libre 27 recourbée autour de l'axe d'accrochage 7, qui est l'axe de liaison 11 avec l'embase fixe 51, 52 correspondante. Ledit axe d'accrochage 7 est dans un plan vertical et est sensiblement perpendiculaire à l'axe de direction 3.

L'axe de tenue 5 de chacun des enroulements 25 est constitué par une tige de maintien mobile 32 suivant son axe, par l'intermédiaire de moyens de déplacement pyrotechniques 43, 44 qui sont mis en action par des moyens de commande, selon la valeur des paramètres extérieurs retenus.

L'axe d'accrochage 7 de chacun des enroulements 25 est constitué par une tige de maintien fixe 31.

La réalisation représentée sur la figure 5 peut s'appliquer à un montage avec un seul enroulement 21 ou 25.

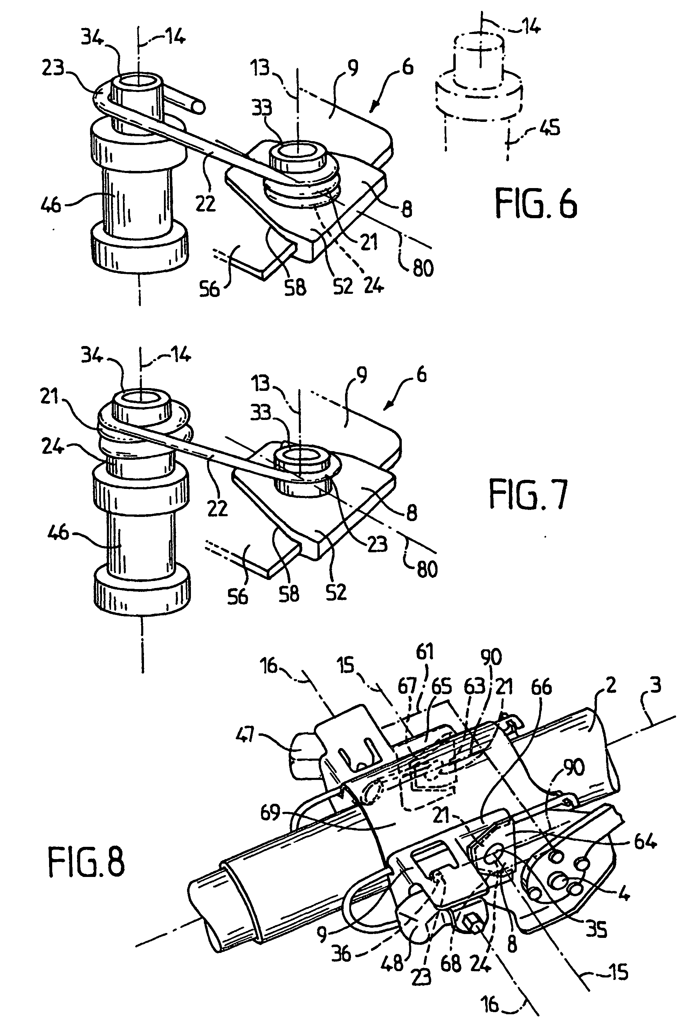

Le dispositif d'absorption modulable d'énergie suivant l'axe d'une colonne de direction selon l'invention, qui est représenté sur la figure 6 comporte un élément support fixe 8 et un élément mobile 9.

L'élément support fixe 8 est constitué par deux embases 51, 52 qui sont solidaires du châssis 10.

Lesdites embases 51 et 52 sont disposées dans un plan, qui est sensiblement parallèle à l'axe de direction 3, et qui est sensiblement perpendiculaire au plan vertical passant par l'axe de direction 3.

L'élément support mobile 9 comporte deux portions latérales 53 et 54 et une portion de raccordement 59. Chaque portion latérale 53 et 54 se prolonge à l'extérieur par une embase mobile correspondante 55 et 56. Lesdites embases mobiles 55 et 56 sont disposées dans un plan, qui est sensiblement parallèle à l'axe de direction 3, et qui est sensiblement perpendiculaire au plan vertical passant par l'axe de direction 3. Chaque embase mobile 55, 56 est munie d'un logement 57, 58 dans lequel vient s'encastrer l'embase fixe 51, 52 correspondante de l'élément support fixe 8. Chaque embase mobile 55 et 56 est reliée et bloquée dans l'embase fixe correspondante 51, 52 à une valeur déterminée afin que ce blocage cesse en cas de choc, qui s'effectue suivant l'axe commun 80 du logement 57, 58 et de l'embase fixe correspondante 51, 52 ; ledit axe 80 étant dans un plan vertical et étant sensiblement parallèle à l'axe de direction 3. Le logement 57 et 58 de l'embase mobile correspondante 55 et 56 et l'embase fixe correspondante 51, 52 sont aménagés pour faciliter le montage et le dégagement en cas de choc.

Un enroulement 21 est disposé à l'extérieur de chaque portion latérale 53, 54. Chaque enroulement 21 a ses deux axes de liaison 13 et 14 qui sont parallèles l'un par rapport à l'autre.

Chaque enroulement 21 est monté sur un rouleau 24 disposé autour de l'axe de tenue 5, qui est l'axe de liaison 13 avec l'embase fixe correspondante 51, 52. Ledit axe de tenue 5 est dans un plan vertical et est sensiblement perpendiculaire à l'axe de direction 3.

Chaque enroulement 21 est muni d'une portion rectiligne 22, qui a sensiblement la même direction que l'effort à amortir. Chaque portion rectiligne 22 se prolonge par une extrémité libre 23 recourbée autour de l'axe d'accrochage 7, qui est l'axe de liaison 14 avec l'embase mobile correspondante 55, 56. Ledit axe d'accrochage 7 est dans un plan vertical et est sensiblement perpendiculaire à l'axe de direction 3.

L'axe d'accrochage 7 de chacun des enroulements 21 est constitué par une tige de maintien mobile 34 suivant son axe, par l'intermédiaire de moyens de déplacement pyrotechniques 45, 46 qui sont mis en action par des moyens de commande, selon la valeur des paramètres extérieurs retenus.

L'axe de tenue 5 de chacun des enroulements 21 est constitué par une tige de maintien fixe 33.

La réalisation représentée sur la figure 6 peut s'appliquer à un montage avec un seul enroulement 21 ou 25.

Le dispositif d'absorption modulable d'énergie suivant l'axe d'une colonne de direction selon l'invention, qui est représenté sur la figure 7 comporte un élément support fixe 8 et un élément mobile 9.

L'élément support fixe 8 est constitué par deux embases 51, 52 qui sont solidaires du châssis 10.

Lesdites embases 51 et 52 sont disposées dans un plan, qui est sensiblement parallèle à l'axe de direction 3, et qui est sensiblement perpendiculaire au plan vertical passant par l'axe de direction 3.

L'élément support mobile 9 comporte deux portions latérales 53 et 54 et une portion de raccordement 59. Chaque portion latérale 53 et 54 se prolonge à l'extérieur par une embase mobile correspondante 55 et 56. Lesdites embases mobiles 55 et 56 sont disposées dans un plan, qui est sensiblement parallèle à l'axe de direction 3, et qui est sensiblement perpendiculaire au plan vertical passant par l'axe de direction 3. Chaque embase mobile 55, 56 est munie d'un logement 57, 58 dans lequel vient s'encastrer l'embase fixe 51, 52 correspondante de l'élément support fixe 8. Chaque embase mobile 55 et 56 est reliée et bloquée dans l'embase fixe correspondante 51, 52 à une valeur déterminée afin que ce blocage cesse en cas de choc. Le logement 57 et 58 de l'embase mobile correspondante 55 et 56 et l'embase fixe correspondante 51, 52 sont aménagés pour faciliter le montage et le dégagement en cas de choc, qui s'effectue suivant l'axe commun 80 du logement 57, 58 et de l'embase fixe correspondante 51, 52 ; ledit axe 80 étant dans un plan vertical et étant sensiblement parallèle à l'axe de direction 3.

Un enroulement 21 est disposé à l'extérieur de chaque portion latérale 53, 54. Chaque enroulement 21 a ses deux axes de liaison 13 et 14 qui sont parallèles l'un par rapport à l'autre.

Chaque enroulement 21 est monté sur un rouleau 24 disposé autour de l'axe de tenue 5, qui est l'axe de liaison 14 avec l'embase mobile 55, 56 correspondante. Ledit axe de tenue 5 est dans un plan vertical et est sensiblement perpendiculaire à l'axe de direction 3.

Chaque enroulement 21 est muni d'une portion rectiligne 22 ayant sensiblement la même direction que l'effort à amortir. Chaque portion rectiligne 22 se prolonge par une extrémité libre 23 recourbée autour de l'axe d'accrochage 7, qui est l'axe de liaison 13 avec l'embase fixe 51, 52 correspondante. Ledit axe d'accrochage 7 est dans un plan vertical et est sensiblement perpendiculaire à l'axe de direction 3.

L'axe de tenue 5 de chacun des enroulements 21 est constitué par une tige de maintien mobile 34 suivant son axe, par l'intermédiaire de moyens de déplacement pyrotechniques 45, 46 qui sont mis en action par des moyens de commande, selon la valeur des paramètres extérieurs retenus.

L'axe d'accrochage 7 de chacun des enroulements 21 est constitué par une tige de maintien fixe 33.

La réalisation représentée sur la figure 7 peut s'appliquer à un montage avec un seul enroulement 21 ou 25.

Le dispositif d'absorption modulable d'énergie suivant l'axe d'une colonne de direction selon l'invention, qui est représenté sur la figure 8 comporte un élément support fixe 8 et un élément mobile 9.

L'élément support fixe 8 est constitué par une embase 61 qui est solidaire du châssis. Ladite embase 61 se prolonge de chaque côté par une portion latérale 63 et 64 sensiblement verticale.

L'élément support mobile 9 comporte deux portions latérales 65 et 66 sensiblement verticales et une portion de raccordement 69. Chaque portion latérale mobile 65 et 66 est munie d'un logement correspondant 67 et 68 et dans lequel vient s'encastrer la portion latérale fixe 63 et 64 correspondante de l'élément support fixe 8. Ladite portion latérale mobile 65 et 66 est reliée et bloquée dans la portion latérale fixe correspondante 63 et 64 à une valeur déterminée afin que ce blocage cesse en cas de choc. Le logement 67 et 68 de la portion latérale mobile 65 et 66 et la portion latérale fixe correspondante 63 et 64 sont aménagés pour faciliter le montage et le dégagement en cas de choc, qui s'effectue suivant l'axe commun 90 du logement 67, 68 et de la portion latérale fixe correspondante 63, 64 ; ledit axe 90 étant sensiblement parallèle à l'axe de direction 3.

Un enroulement 21 est disposé à l'extérieur de chaque portion latérale fixe 63, 64 ; chaque enroulement 21 ayant ses deux axes de liaison 15, 16 qui sont parallèles l'un par rapport à l'autre.

Chaque enroulement 21 est monté sur un rouleau 24 disposé autour de l'axe de tenue 5, qui est l'axe de liaison 15 avec la portion latérale fixe 63 et 64 correspondante. Ledit axe de tenue 5 est sensiblement horizontal, et est sensiblement perpendiculaire au plan vertical passant par l'axe de direction 3.

Chaque enroulement 21 est muni d'une portion rectiligne 22 ayant sensiblement la même direction que l'effort à amortir. Chaque portion rectiligne 22 se prolonge par une extrémité libre 23 recourbée autour de l'axe d'accrochage 7, qui est l'axe de liaison 16 avec la portion latérale mobile correspondante65 et 66. Ledit axe d'accrochage 7 est sensiblement horizontal et est sensiblement perpendiculaire au plan vertical passant par l'axe de direction 3.

L'axe d'accrochage 7 de chacun des deux enroulements 21 est constitué par une tige de maintien mobile 36 suivant son axe, par l'intermédiaire de moyens de déplacement pyrotechniques 47, 48 qui sont mis en action par des moyens de commande, selon la valeur des paramètres extérieurs retenus.

L'axe de tenue 5 de chacun des enroulements 21 est constitué par une tige de maintien fixe 35.

La réalisation représentée sur la figure 8 peut s'appliquer à un montage avec un seul enroulement 21 ou 25.

Le dispositif d'absorption modulable d'énergie suivant l'axe d'une colonne de direction selon l'invention, qui est représenté sur la figure 9 comporte un élément support fixe 8 et un élément mobile 9.

L'élément support fixe 8 est constitué par une embase 61 qui est solidaire du châssis. Ladite embase 61 se prolonge de chaque côté par une portion latérale 63 et 64 sensiblement verticale.

L'élément support mobile 9 comporte deux portions latérales 65 et 66 sensiblement verticales et une portion de raccordement 69. Chaque portion latérale mobile 65 et 66 est munie d'un logement correspondant 67 et 68 dans lequel vient s'encastrer la portion latérale fixe 63 et 64 correspondante de l'élément support fixe 8. Ladite portion latérale mobile 65 et 66 est reliée et bloquée dans la portion latérale fixe correspondante 63 et 64 à une valeur déterminée afin que ce blocage cesse en cas de choc. Le logement 67 et 68 de la portion latérale mobile 65 et 66 et la portion latérale fixe correspondante 63 et 64 sont aménagés pour faciliter le montage et le dégagement en cas de choc, qui s'effectue suivant l'axe commun 90 du logement 67, 68 et de la portion latérale fixe correspondante 63, 64 ; ledit axe 90 étant sensiblement parallèle à l'axe de direction 3.

Un enroulement 21 est disposé à l'extérieur de chaque portion latérale fixe 63, 64 ; chaque enroulement 21 ayant ses deux axes de liaison 15, 16 qui sont parallèles l'un par rapport à l'autre.

Chaque enroulement 21 est monté sur un rouleau 24 disposé autour de l'axe de tenue 5, qui est l'axe de liaison 16 avec la portion latérale mobile 65, 66 correspondante. Ledit axe de tenue 5 est sensiblement horizontal, et est sensiblement perpendiculaire au plan vertical passant par l'axe de direction 3.

Chaque enroulement 21 est muni d'une portion rectiligne 22 ayant sensiblement la même direction que l'effort à amortir. Chaque portion rectiligne 22 se prolonge par une extrémité libre 23 recourbée autour de l'axe d'accrochage 7, qui est l'axe de liaison 15 avec la portion latérale fixe 63, 64 correspondante. Ledit axe d'accrochage 7 est sensiblement horizontal, et est sensiblement perpendiculaire au plan vertical passant par l'axe de direction 3.

L'axe de tenue 5 de chacun des deux enroulements 21 est constitué par une tige de maintien mobile 36 suivant son axe, par l'intermédiaire de moyens de déplacement pyrotechniques 47, 48 qui sont mis en action par des moyens de commande, selon la valeur des paramètres extérieurs retenus.

L'axe d'accrochage 7 de chacun des enroulements 21 est constitué par une tige de maintien fixe 35.

La réalisation représentée sur la figure 9 peut s'appliquer à un montage avec un seul enroulement 21 ou 25.

Dans toute la description ci-dessus, il a été disposé un enroulement 21 ou 25 de part et d'autre du plan vertical, passant par l'axe de direction ; les deux enroulements ayant la même référence. Selon l'invention, chacun des deux enroulements 21 ou chacun des deux enroulements 25 peut avoir des caractéristiques spécifiques. Ces caractéristiques sont notamment :
- la configuration ;
- la distance entre l'axe de tenue 5 et l'axe d'accrochage 7 ;
- le nombre de spires ; et
- la capacité d'absorption d'énergie.

Selon une caractéristique de l'invention, le dispositif d'absorption d'énergie agit directement suivant l'axe 3 de la colonne de direction. Les moyens de déplacement pyrotechniques 41,42 ; 43,44 ; 45,46 ; 47,48 sont mis en action par des moyens de commande qui sont constitués par une unité centrale électronique. Cette unité centrale électronique gère le fonctionnement desdits moyens de déplacement pyrotechniques en tenant compte notamment de différents paramètres tels que : le port ou non de la ceinture de sécurité, le poids du conducteur, sa position par rapport au volant ou la vitesse du véhicule.

Selon l'invention toutes les réalisations du dispositif d'absorption d'énergie décrites et représentées sur les différentes figures, peuvent s'appliquer à un montage avec un seul enroulement 21 ou 25.

## Revendications

1. Dispositif d'absorption modulable d'énergie d'une colonne de direction de véhicule automobile, qui comprend :
- un arbre de direction (1) monté tournant dans un tube corps (2) autour d'un axe de direction (3), ledit tube-corps (2) est relié à un ensemble support (6) qui est fixé au châssis (10) du véhicule,
- un élément support fixe (8) qui est solidaire du châssis (10) du véhicule, et un élément support mobile (9) qui est relié à l'élément support fixe (8) afin de constituer l'ensemble support (6), l'élément support mobile (9) est relié et bloqué sur l'élément support fixe (8) à une valeur déterminée afin que ce blocage cesse en cas de choc,
**caractérisé en ce que** ledit système d'absorption modulable d'énergie consiste en :
- au moins un enroulement (21, 25) d'un élément métallique de section déterminée, l'enroulement (21, 25) étant relié à l'élément support fixe (8) et à l'élément support mobile (9),
- l'enroulement (21, 25) est disposé seul d'un côté du plan vertical passant par l'axe de direction (3) ;
- l'enroulement (21, 25) est raccordé à l'élément support fixe (8) par un axe de liaison (11, 13, 15) qui lui est propre et qui est constitué par une tige de maintien (31, 33, 35) qui est uniquement affecté à cet enroulement (21, 25),
- l'enroulement (21, 25) est raccordé à l'élément support mobile (9) par un axe de liaison (12, 14, 16) qui lui est propre et qui est constitué par une tige de maintien (32, 34, 36) qui est uniquement affecté à cet enroulement (21, 25),
- l'enroulement (21, 25) est monté sur un rouleau (24, 28) qui lui est propre et qui est disposé sur un axe de tenue (5) constituant l'axe de liaison avec l'un des deux éléments supports (8, 9),
- l'enroulement (21, 25) est muni d'une portion rectiligne (22, 26) qui a sensiblement la même direction que l'effort à amortir, chaque portion rectiligne (22, 26) se prolongeant par une extrémité libre (23, 27) qui s'amarre à un axe d'accrochage (7) constituant l'axe de liaison avec l'autre élément support (9, 8),
- l'enroulement (21, 25) a un de ses deux axes de liaison qui est constitué par une tige de maintien mobile (32, 34, 36) suivant son axe par l'intermédiaire de moyens de déplacement pyrotechniques (41,42 ; 43,44 ; 45,46 ; 47,48) qui sont mis en action par des moyens de commande,
- les différents éléments étant agencés de manière qu'en cas de choc, et suivant la valeur des paramètres retenus :
. l'élément support mobile (9) soit relié à l'élément support fixe (8) par un nombre voulu d'enroulements (21, 25),
. de façon que l'élément support mobile (9) relié au tube-corps (2) donc au volant se dégage et se déplace par rapport à l'élément support fixe (8) suivant un axe (80, 90) qui est sensiblement parallèle à l'axe de direction (3), en absorbant tout ou partie de l'énergie à dissiper demandée.

2. Dispositif d'absorption modulable d'énergie selon la revendication 1, **caractérisé en ce qu'**il comprend :
- deux enroulements (21, 25) d'un élément métallique de section déterminée, l'enroulement (21, 25) étant reliés à l'élément support fixe (8) et à l'élément support mobile (9) ;
- un des deux enroulements (21, 25) est disposé d'un côté du plan vertical passant par l'axe de direction (3), et l'autre enroulement est disposé de l'autre côté dudit plan vertical passant par l'axe de direction (3).

3. Dispositif d'absorption modulable d'énergie selon la revendication 1, **caractérisé en ce que** les moyens de commande de déplacement pyrotechnique sont agencés de manière qu'en cas de choc, l'élément support mobile (9) soit relié à l'élément support fixe (8) :
- par l'enroulement (21, 25), ou
- par aucun enroulement
de façon que l'élément support mobile (9) relié au tube-corps (2) donc au volant se déplace par rapport à l'élément support fixe (8) en absorbant tout ou partie de l'énergie à dissiper demandée.

4. Dispositif d'absorption modulable d'énergie selon la revendication 2, **caractérisé en que** les moyens de commande de déplacement pyrotechnique sont agencés de manière qu'en cas de choc, l'élément support mobile (9) soit relié à l'élément support fixe (8) :
- par les deux enroulement (21, 25), ou
- par l'un des deux enroulements (21, 25), ou
- par l'autre enroulement (25, 21), ou
- par aucun enroulement
de façon que l'élément support mobile (9) relié au tube-corps (2) donc au volant se déplace par rapport à l'élément support fixe (8) en absorbant tout ou partie de l'énergie à dissiper demandée.

5. Dispositif d'absorption modulable d'énergie selon l'une des revendications 2 et 4, **caractérisé en ce que** l'axe de tenue (5) de chacun des deux enroulements (21, 25) est disposé dans l'élément support fixe (8), et **en ce que** l'axe d'accrochage (7) de chacun des deux enroulements (21, 25) est disposé dans l'élément support mobile (9).

6. Dispositif d'absorption modulable d'énergie selon l'une des revendications 2 et 4, **caractérisé en ce que** l'axe de tenue (5) de chacun des deux enroulements (21, 25) est disposé dans l'élément support mobile (9), et **en ce que** l'axe d'accrochage (7) de chacun des deux enroulements (21, 25) est disposé dans l'élément support fixe (8).

7. Dispositif d'absorption modulable d'énergie selon l'une quelconque des revendications précédentes, **caractérisé en ce que** chaque enroulement (21) a ses deux axes de liaison, c'est-à-dire son axe de tenue (5) et son axe d'accrochage (7) qui sont sensiblement parallèles l'un par rapport à l'autre.

8. Dispositif d'absorption modulable d'énergie selon l'une quelconque des revendications 1 à 6, **caractérisé en ce que** chaque enroulement (25) a ses deux axes de liaison, c'est-à-dire son axe de tenue (5) et son axe d'accrochage (7) qui sont sensiblement perpendiculaires l'un par rapport à l'autre.

9. Dispositif d'absorption modulable d'énergie selon la revendication 7, **caractérisé en ce que** les deux axes de liaison (13, 14) de chacun des deux enroulements (21) sont dans un plan vertical, qu'ils sont sensiblement parallèles l'un par rapport à l'autre, et qu'ils sont sensiblement perpendiculaires à l'axe de direction (3).

10. Dispositif d'absorption modulable d'énergie selon la revendication 7, **caractérisé en ce que** les deux axes de liaison (15, 16) de chacun des deux enroulements (21) sont sensiblement horizontaux, et qu'ils sont sensiblement perpendiculaires au plan vertical passant par l'axe de direction.

11. Dispositif d'absorption modulable d'énergie selon la revendication 8, **caractérisé en ce que** les axes de tenue (5) des deux enroulements (25) sont chacun dans un plan vertical, qu'ils sont sensiblement parallèles l'un par rapport à l'autre, et qu'ils sont sensiblement perpendiculaires à l'axe de direction (3) ; et **en ce que** les axes d'accrochage (7) des deux enroulements (25) sont sensiblement horizontaux, et qu'ils sont sensiblement perpendiculaires au plan vertical passant par l'axe de direction.

12. Dispositif d'absorption modulable d'énergie selon la revendication 8, **caractérisé en ce que** les axes de tenue (5) des deux enroulements (25) sont sensiblement horizontaux, et qu'ils sont sensiblement perpendiculaires au plan vertical passant par l'axe de direction (3) ; et **en ce que** les axes d'accrochage (7) des deux enroulements sont chacun dans un plan vertical, qu'ils sont sensiblement parallèles l'un par rapport à l'autre, et qu'ils sont sensiblement perpendiculaires à l'axe de direction (3).

13. Dispositif d'absorption modulable d'énergie selon la revendication 8, **caractérisé en ce que** :
- l'élément support fixe (8) est constitué par deux embases (51, 52) qui sont solidaires du châssis (10),
- l'élément support mobile (9) comporte deux portions latérales (53, 54) et une portion de raccordement (59), chaque portion latérale (53, 54) se prolonge à l'extérieur par une embase mobile (55, 56) munie d'un logement (57, 58) dans lequel vient s'encastrer l'embase fixe (51, 52) correspondante de l'élément support fixe (8), ladite embase mobile (55, 56) est reliée et bloquée dans l'embase fixe (51, 52) à une valeur déterminée afin que ce blocage cesse en cas de choc ; le logement (57, 58) de l'embase mobile (55, 56) et l'embase fixe (51, 52) sont aménagés pour faciliter le montage et le dégagement en cas de choc ;
- un enroulement (25) est disposé à l'extérieur de chaque portion latérale (53, 54), chaque enroulement (25) ayant ses deux axes de liaison (11, 12) qui sont perpendiculaires l'un par rapport à l'autre,
- chaque enroulement (25) est monté sur un rouleau (28) disposé autour de l'axe de tenue (5), qui est l'axe de liaison (11) avec l'embase fixe (51, 52) correspondante, ledit axe de tenue (5) est dans un plan vertical et est sensiblement perpendiculaire à l'axe de direction (3) ;
- chaque enroulement (25) est muni d'une portion rectiligne (26) ayant sensiblement la même direction que l'effort à amortir, chaque portion rectiligne (26) se prolongeant par une extrémité libre (27) recourbée autour de l'axe d'accrochage (7), qui est l'axe de liaison (12) avec la portion latérale (53, 54) correspondante, ledit axe d'accrochage (7) est sensiblement horizontal, et est sensiblement perpendiculaire au plan vertical passant par l'axe de direction (3) ;
- l'axe d'accrochage (7) est constitué par une tige de maintien (32) mobile suivant son axe, par l'intermédiaire de moyens de déplacement pyrotechniques (41, 42) qui sont mis en action par des moyens de commande selon la valeur des paramètres extérieurs retenus ;
- l'axe de tenue (5) de chacun des deux enroulements (25) est constitué par une tige de maintien fixe (31).

14. Dispositif d'absorption modulable d'énergie selon la revendication 8, **caractérisé en ce que** :
- l'élément support fixe (8) est constitué par deux embases (51, 52) qui sont solidaires du châssis (10),
- l'élément support mobile (9) comporte deux portions latérales (53, 54) et une portion de raccordement (59), chaque portion latérale (53, 54) se prolonge à l'extérieur par une embase mobile (55, 56) munie d'un logement (57, 58) dans lequel vient s'encastrer l'embase fixe (51, 52) correspondante de l'élément support fixe (8), ladite embase mobile (55, 56) est reliée et bloquée dans l'embase fixe (51, 52) à une valeur déterminée afin que ce blocage cesse en cas de choc ; le logement (57, 58) de l'embase mobile (55, 56) et l'embase fixe (51, 52) sont aménagés pour faciliter le montage et le dégagement en cas de choc ;
- un enroulement (25) est disposé à l'extérieur de chaque portion latérale (53, 54), chaque enroulement (25) ayant ses deux axes de liaison (11, 12) qui sont perpendiculaires l'un par rapport à l'autre,
- chaque enroulement (25) est monté sur un rouleau (28) disposé autour de l'axe de tenue (5), qui est l'axe de liaison (12) avec la portion latérale (53, 54) correspondante, ledit axe de tenue (5) est sensiblement horizontal, et est sensiblement perpendiculaire au plan vertical passant par l'axe de direction ;
- chaque enroulement (25) est muni d'une portion rectiligne (26) ayant sensiblement la même direction que l'effort à amortir, chaque portion rectiligne (26) se prolongeant par une extrémité libre (27) recourbée autour de l'axe d'accrochage (7), qui est l'axe de liaison (11) avec l'embase fixe (51, 52) correspondante, ledit axe d'accrochage (7) est dans un plan vertical et est sensiblement perpendiculaire à l'axe de direction ;
- l'axe de tenue (5) est constitué par une tige de maintien mobile (32) suivant son axe, par l'intermédiaire de moyens de déplacement pyrotechniques (43, 44) qui sont mis en action par des moyens de commande selon la valeur des paramètres extérieurs retenus ;
- l'axe d'accrochage (7) de chacun des deux enroulements (25) est constitué par une tige de maintien fixe (31).

15. Dispositif d'absorption modulable d'énergie selon la revendication 7, **caractérisé en ce que** :
- l'élément support fixe (8) est constitué par une embase (61) qui est solidaire du châssis (10), ladite embase (61) se prolongeant de chaque côté par une portion latérale (63, 64) sensiblement verticale ;
- l'élément support mobile (9) comporte deux portions latérales (65, 66) et une portion de raccordement (69), chaque portion latérale mobile (65, 66) est munie d'un logement (67, 68) dans lequel vient s'encastrer la portion latérale fixe (63, 64) correspondante de l'élément support fixe (8), ladite portion latérale mobile (65, 66) est reliée et bloquée dans la portion latérale fixe (63, 64) à une valeur déterminée afin que ce blocage cesse en cas de choc ; le logement (67, 68) de la portion latérale mobile (65, 66) et la portion latérale fixe (63, 64) sont aménagés pour faciliter le montage et le dégagement en cas de choc ;
- un enroulement (21) est disposé à l'extérieur de chaque portion latérale fixe (63, 64), chaque enroulement (21) ayant ses deux axes de liaison (15, 16) qui sont parallèles l'un par rapport à l'autre,
- chaque enroulement (21) est monté sur un rouleau (24) disposé autour de l'axe de tenue (5), qui est l'axe de liaison (15) avec la portion latérale fixe (63, 64) correspondante, ledit axe de tenue (5) est sensiblement horizontal, et est sensiblement perpendiculaire au plan vertical passant par l'axe de direction (3) ;
- chaque enroulement (21) est muni d'une portion rectiligne (22) ayant sensiblement la même direction que l'effort à amortir, chaque portion rectiligne (22) se prolongeant par une extrémité libre (23) recourbée autour de l'axe d'accrochage (7), qui est l'axe de liaison (16) avec la portion latérale mobile (65, 66) correspondante, ledit axe d'accrochage (7) est sensiblement horizontal et est sensiblement perpendiculaire au plan vertical passant par l'axe de direction ;
- l'axe d'accrochage (7) est constitué par une tige de maintien mobile (36) suivant son axe, par l'intermédiaire de moyens de déplacement pyrotechniques (47, 48) qui sont mis en action par des moyens de commande selon la valeur des paramètres extérieurs retenus ;
- l'axe de tenue (5) de chacun des deux enroulements (21) est constitué par une tige de maintien fixe (35).

16. Dispositif d'absorption modulable d'énergie selon la revendication 7, **caractérisé en ce que** :
- l'élément support fixe (8) est constitué par une embase (61) qui est solidaire du châssis (10), ladite embase (61) se prolongeant de chaque côté par une portion latérale (63, 64) sensiblement verticale ;
- l'élément support mobile (9) comporte deux portions latérales (65, 66) et une portion de raccordement (69), chaque portion latérale mobile (65, 66) est munie d'un logement (67, 68) dans lequel vient s'encastrer la portion latérale fixe (63, 64) correspondante de l'élément support fixe (8), ladite portion latérale mobile (65, 66) est reliée et bloquée dans la portion latérale fixe (63, 64) à une valeur déterminée afin que ce blocage cesse en cas de choc ; le logement (67, 68) de la portion latérale mobile (65, 66) et la portion latérale fixe (63, 64) sont aménagés pour faciliter le montage et le dégagement en cas de choc ;
- un enroulement (21) est disposé à l'extérieur de chaque portion latérale fixe (63, 64), chaque enroulement (21) ayant ses deux axes de liaison (15, 16) qui sont parallèles l'un par rapport à l'autre,
- chaque enroulement (21) est monté sur un rouleau (24) disposé autour de l'axe de tenue (5), qui est l'axe de liaison (16) avec la portion latérale mobile (65, 66) correspondante, ledit axe de tenue (5) est sensiblement horizontal, et est sensiblement perpendiculaire au plan vertical passant par l'axe de direction ;
- chaque enroulement (21) est muni d'une portion rectiligne (22) ayant sensiblement la même direction que l'effort à amortir, chaque portion rectiligne (22) se prolongeant par une extrémité libre (23) recourbée autour de l'axe d'accrochage (7), qui est l'axe de liaison (15) avec la portion latérale fixe (63, 64) correspondante, ledit axe d'accrochage (7) est sensiblement horizontal, et est sensiblement perpendiculaire au plan vertical passant par l'axe de direction (3) ;
- l'axe de tenue (5) est constitué par une tige de maintien mobile (36) suivant son axe, par l'intermédiaire de moyens de déplacement pyrotechniques (47, 48) qui sont mis en action par des moyens de commande selon la valeur des paramètres extérieurs retenus ;
- l'axe d'accrochage (7) de chacun des deux enroulements (21) est constitué par une tige de maintien fixe (35).

17. Dispositif d'absorption modulable d'énergie selon la revendication 7, **caractérisé en ce que** :
- l'élément support fixe (8) est constitué par deux embases (51, 52) qui sont solidaires du châssis (10),
- l'élément support mobile (9) comporte deux portions latérales (53, 54) et une portion de raccordement (59), chaque portion latérale (53, 54) se prolonge à l'extérieur par une embase mobile (55, 56) munie d'un logement (57, 58) dans lequel vient s'encastrer l'embase fixe (51, 52) correspondante de l'élément support fixe (8), ladite embase mobile (55, 56) est reliée et bloquée dans l'embase fixe (51, 52) à une valeur déterminée afin que ce blocage cesse en cas de choc ; le logement (57, 58) de l'embase mobile (55, 56) et l'embase fixe (51, 52) sont aménagés pour faciliter le montage et le dégagement en cas de choc ;
- un enroulement (21) est disposé à l'extérieur de chaque portion latérale (53, 54), chaque enroulement (21) ayant ses deux axes de liaison (13, 14) qui sont parallèles l'un par rapport à l'autre,
- chaque enroulement (21) est monté sur un rouleau (24) disposé autour de l'axe de tenue (5), qui est l'axe de liaison (13) avec l'embase fixe (51, 52) correspondante, ledit axe de tenue (5) est dans un plan vertical et est sensiblement perpendiculaire à l'axe de direction ;
- chaque enroulement (21) est muni d'une portion rectiligne (22) ayant sensiblement la même direction que l'effort à amortir, chaque portion rectiligne (22) se prolongeant par une extrémité libre (23) recourbée autour de l'axe d'accrochage (7), qui est l'axe de liaison (14) avec l'embase mobile (55, 56) correspondante, ledit axe d'accrochage (7) est dans un plan vertical et est sensiblement perpendiculaire à l'axe de direction ;
- l'axe d'accrochage (7) est constitué par une tige de maintien mobile (34) suivant son axe, par l'intermédiaire de moyens de déplacement pyrotechniques (45, 46) qui sont mis en action par des moyens de commande selon la valeur des paramètres extérieurs retenus ;
- l'axe de tenue (5) de chacun des deux enroulements (21) est constitué par une tige de maintien fixe (33).

18. Dispositif d'absorption modulable d'énergie selon la revendication 7, **caractérisé en ce que** :
- l'élément support fixe (8) est constitué par deux embases (51, 52) qui sont solidaires du châssis (10),
- l'élément support mobile (9) comporte deux portions latérales (53, 54) et une portion de raccordement (59), chaque portion latérale (53, 54) se prolonge à l'extérieur par une embase mobile (55, 56) munie d'un logement (57, 58) dans lequel vient s'encastrer l'embase fixe (51, 52) correspondante de l'élément support fixe (8), ladite embase mobile (55, 56) est reliée et bloquée dans l'embase fixe (51, 52) à une valeur déterminée afin que ce blocage cesse en cas de choc ; le logement (57, 58) de l'embase mobile (55, 56) et l'embase fixe (51, 52) sont aménagés pour faciliter le montage et le dégagement en cas de choc ;
- un enroulement (21) est disposé à l'extérieur de chaque portion latérale (53, 54), chaque enroulement (21) ayant ses deux axes de liaison (13, 14) qui sont parallèles l'un par rapport à l'autre,
- chaque enroulement (21) est monté sur un rouleau (24) disposé autour de l'axe de tenue (5), qui est l'axe de liaison (14) avec l'embase mobile (55, 56) correspondante, ledit axe de tenue (5) est dans un plan vertical et est sensiblement perpendiculaire à l'axe de direction (3) ;
- chaque enroulement (21) est muni d'une portion rectiligne (22) ayant sensiblement la même direction que l'effort à amortir, chaque portion rectiligne (22) se prolongeant par une extrémité libre (23) recourbée autour de l'axe d'accrochage (7), qui est l'axe de liaison (13) avec l'embase fixe (51, 52) correspondante, ledit axe d'accrochage (7) est dans un plan vertical et est sensiblement perpendiculaire à l'axe de direction (3) ;
- l'axe de tenue (5) est constitué par une tige de maintien mobile (34) suivant son axe, par l'intermédiaire de moyens de déplacement pyrotechniques (45, 46) qui sont mis en action par des moyens de commande selon la valeur des paramètres extérieurs retenus ;
- l'axe d'accrochage (7) de chacun des deux enroulements (21) est constitué par une tige de maintien fixe (33).

## Patentansprüche

1. Flexible Energieaufnahmevorrichtung einer KraftfahrzeugLenksäule, bestehend aus:
- einer Lenkspindel (1), die drehbar in einer Röhre (2) um eine Lenkwelle (3) montiert ist, wobei die genannte Röhre (3) mit einer Halterung (6) verbunden ist, die am Fahrgestell (10) des Fahrzeugs befestigt ist,
- einem festen Trägerelement (8), das fest mit dem Fahrgestell (10) des Fahrzeugs verbunden ist, und einem beweglichen Trägerelement (9), das mit dem festen Trägerelement (8) verbunden ist, um eine Trägereinheit (6) zu bilden, wobei das bewegliche Trägerelement (9) auf dem festen Trägerelement (8) befestigt und mit einem bestimmten Wert blockiert ist, so dass sich diese Blockierung im Fall eines Aufpralls löst,
**dadurch gekennzeichnet, dass** die genannte Energieaufnahmevorrichtung umfasst:
- mindestens eine Wicklung (21, 25) eines Metallelements mit bestimmten Querschnitt, wobei die Wicklung (21, 25) mit dem festen Trägerelement (8) und dem beweglichen Trägerelement (9) verbunden ist,
- die Wicklung (21, 25) ist nur auf einer Seite der vertikalen Ebene, entlang der Lenkwelle (3) angeordnet;
- die Wicklung (21, 25) ist durch eine eigene Verbindungsachse (11, 13, 15) mit dem festen Trägerelement (8) verbunden, das aus einem Halteschaft (31, 33, 35) besteht, der nur dieser Wicklung (21, 25) zugeordnet ist,
- die Wicklung (21, 25) ist durch eine eigene Verbindungsachse (12, 14, 16) mit dem beweglichen Trägerelement (9) verbunden, das aus einem Halteschaft (32, 34, 36) besteht, der nur dieser Wicklung (21, 25) zugeordnet ist,
- die Wicklung (21, 25) ist auf einer eigenen Rolle (24, 28) montiert, die entlang der Befestigungsachse (5) angeordnet ist, die die Verbindungsachse zu einem der beiden Trägerelemente (8, 9) darstellt,
- die Wicklung (21, 25) ist mit einem geraden Bereich (22, 26) ausgerüstet, der praktisch die gleiche Ausrichtung aufweist wie die aufzunehmende Belastung, wobei jeder gerade Bereich (22, 26) in einem freien Ende (23, 27) ausläuft, das an einer Aufhängungsachse (7) befestigt wird, die die Verbindungsachse zu dem anderen Trägerelement (9, 8) darstellt,
- die Wicklung (21, 25) ist an einer ihrer beiden Verbindungsachsen, die durch einen entlang seiner Achse beweglichen Halteschaft (32, 34, 36) dargestellt werden, mit pyrotechnischen Verschiebevorrichtungen (41, 42; 43, 44; 45, 46; 47,48) ausgerüstet, die durch Steuervorrichtungen ausgelöst werden.
- verschiedene Elemente sind so angeordnet, dass im Fall eines Aufpralls und entsprechend dem Wert gewählter Parameter:
• das bewegliche Trägerelement mit dem beweglichen Trägerelement (8) über eine bestimmte Anzahl an Wicklungen (21, 25) verbunden ist,
• so dass sich das bewegliche Trägerelement (9), das mit der Röhre (2) und somit auch mit dem Lenkrad verbunden ist, löst und sich in Bezug auf das feste Trägerelement (8) entlang einer Achse (80, 90) verschiebt, die praktisch parallel zur Lenkwelle (3) verläuft und somit die vorgegebene, abzuleitende Energie ganz oder teilweise aufnimmt.

2. Flexible Energieaufnahmevorrichtung gemäß Anspruch 1, **dadurch gekennzeichnet, dass** sie umfasst:
- zwei Wicklungen (21, 25) eines Metallelements mit bestimmten Querschnitt, wobei die Wicklung (21, 25) mit dem festen Trägerelement (8) und dem beweglichen Trägerelement (9) verbunden ist;
- eine der beiden Wicklungen (21, 25) ist auf einer Seite der vertikalen Ebene entlang der Lenkwelle (3) angeordnet, und die andere Wicklung ist auf der anderen Seite der vertikalen Ebene entlang der Lenkwelle (3) angeordnet.

3. Flexible Energieaufnahmevorrichtung gemäß Anspruch 1, **dadurch gekennzeichnet, dass** die Steuervorrichtungen zur pyrotechnischen Verschiebung so angeordnet sind, dass das bewegliche Trägerelement (9) im Fall eines Aufpralls mit dem festen Trägerelement (8) verbunden ist:
- durch die Wicklung (21, 25) oder
- durch keine der Wicklungen,
so dass das bewegliche Trägerelement (9), das mit der Röhre (2) und somit auch mit dem Lenkrad verbunden ist, sich in Bezug auf das feste Trägerelement (8) verschiebt und auf diese Weise die geforderte, aufzunehmende Energie ganz oder teilweise aufnimmt.

4. Flexible Energieaufnahmevorrichtung gemäß Anspruch 2, **dadurch gekennzeichnet, dass** die Steuervorrichtungen zur pyrotechnischen Verschiebung so angeordnet sind, dass das bewegliche Trägerelement (9) im Fall eines Aufpralls mit dem festen Trägerelement (8) verbunden ist:
- durch die beiden Wicklungen (21, 25), oder
- durch eine der beiden Wicklungen (21, 25), oder
- durch die andere Wicklung (25, 21), oder
- durch keine der Wicklungen
so dass sich das bewegliche Trägerelement (9), das mit der Röhre, und somit auch mit dem Lenkrad verbunden ist, in Bezug auf das feste Trägerelement (8) verschiebt und dabei die geforderte, aufzunehmende Energie ganz oder teilweise aufnimmt.

5. Flexible Energieaufnahmevorrichtung gemäß einem der Ansprüche 2 und 4, **dadurch gekennzeichnet, dass** die Befestigungsachse (5) jeder der beiden Wicklungen (21, 25) im festen Trägerelement (8) angeordnet ist, sowie **dadurch**, dass die Aufhängungsachse (7) jeder der beiden Wicklungen (21, 25) im beweglichen Trägerelement (9) angeordnet ist.

6. Flexible Energieaufnahmevorrichtung gemäß einem der Ansprüche 2 und 4, **dadurch gekennzeichnet, dass** die Befestigungsachse (5) jeder der beiden Wicklungen (21, 25) im beweglichen Trägerelement (9) angeordnet ist, sowie **dadurch**, dass die Aufhängungsachse (7) jeder der beiden Wicklungen (21, 24) in dem festen Trägerelement (8) angeordnet ist.

7. Flexible Energieaufnahmevorrichtung gemäß einem der vorgenannten Ansprüche, **dadurch gekennzeichnet, dass** jede Wicklung (21) zwei Verbindungsachsen aufweist, das heißt, eine Befestigungsachse (5) und eine Aufhängungsachse (7), die praktisch parallel zueinander verlaufen.

8. Flexible Energieaufnahmevorrichtung gemäß einem der Ansprüche 1 bis 8, **dadurch gekennzeichnet, dass** jede Wicklung (25) zwei Verbindungsachsen aufweist, das heißt, eine Befestigungsachse (5) und eine Aufhängungsachse (7), die praktisch senkrecht zueinander verlaufen.

9. Flexible Energieaufnahmevorrichtung gemäß Anspruch 7, **dadurch gekennzeichnet, dass** beiden Verbindungsachsen (13, 14) der beiden Wicklungen (21) in einer vertikalen Ebene angeordnet sind, dass sie praktisch parallel zueinander verlaufen und dass sie praktisch senkrecht zur Lenkwelle (3) angeordnet sind.

10. Flexible Energieaufnahmevorrichtung gemäß Anspruch 7, **dadurch gekennzeichnet, dass** die beiden Verbindungsachsen (15, 16) der beiden Wicklungen (21) praktisch horizontal verlaufen und dass sie praktisch senkrecht zur vertikalen Ebene entlang der Lenkwelle angeordnet sind.

11. Flexible Energieaufnahmevorrichtung gemäß Anspruch 8, **dadurch gekennzeichnet, dass** die Befestigungsachsen (5) der beiden Wicklungen (25) jeweils in der vertikalen Ebene verlaufen, dass sie praktisch parallel zueinander angeordnet sind und dass sie praktisch senkrecht zur Lenkwelle (3) verlaufen, sowie **dadurch**, dass die Aufhängungsachsen (7) der beiden Wicklungen (25) praktisch horizontal angeordnet sind und dass sie praktisch senkrecht zur vertikalen Ebene entlang der Lenkwelle verlaufen.

12. Flexible Energieaufnahmevorrichtung gemäß Anspruch 8, **dadurch gekennzeichnet, dass** die Befestigungsachsen (5) der beiden Wicklungen (25) praktisch horizontal angeordnet sind und dass sie praktisch senkrecht zur vertikalen Ebene entlang der Lenkwelle (3) verlaufen, sowie **dadurch**, dass die Aufhängungsachsen (7) der beiden Wicklungen jeweils in der vertikalen Ebene angeordnet sind und dass sie praktisch parallel zueinander verlaufen und dass sie praktisch senkrecht zur Lenkwelle (3) angeordnet sind.

13. Flexible Energieaufnahmevorrichtung gemäß Anspruch 8, **dadurch gekennzeichnet, dass**:
- das feste Trägerelement (8) aus zwei Befestigungsflächen (51, 52) besteht, die fest mit dem Fahrgestell (10) verbunden sind,
- das bewegliche Trägerelement (9) zwei seitliche Bereiche (53, 54) und einen Anschlussbereich (59) umfasst, wobei jeder seitliche Bereich (53, 54) außen in einer beweglichen Befestigungsfläche (55, 56) endet, die mit einer Aufnahme (57, 58) ausgerüstet ist, in die die entsprechende feste Befestigungsfläche (51, 52) des festen Trägerelements (8) eingepasst wird, wobei die genannte bewegliche Befestigungsfläche (55, 56) mit der festen Befestigungsfläche (51, 52) verbunden und mit einem bestimmten Wert blockiert ist, so dass sich diese Blockierung im Fall eines Aufpralls löst; die Aufnahme (57, 58) der beweglichen Befestigungsfläche (55, 56) und die feste Befestigungsfläche (51, 52) sind entsprechend ausgeführt, um die Montage und die Lösung im Fall eines Aufpralls zu erleichtern;
- eine Wicklung (25) außen an jedem seitlichen Bereich (53, 54) angeordnet ist, wobei jede Wicklung (25) zwei Verbindungsachsen (11, 12) aufweist, die parallel zueinander verlaufen;
- jede Wicklung (25) auf einer Rolle (28) montiert ist, die entlang der Befestigungsachse (5) angeordnet ist, die die Verbindungsachse (11) zu der entsprechenden, festen Befestigungsfläche (51, 52) darstellt, wobei die genannte Befestigungsachse (5) in einer vertikalen Ebene und praktisch senkrecht zur Lenkwelle (3) angeordnet ist;
- jede Wicklung (25) mit einem geraden Bereich (26) versehen ist, der praktisch die gleiche Ausrichtung aufweist wie die aufzunehmende Belastung, wobei jeder gerade Bereich (26) in einem freien Ende (27) ausläuft, das um die Aufhängungsachse (7) gebogen ist, die die Verbindungsachse (12) zu dem entsprechenden seitlichen Bereich (53, 54) darstellt, wobei die genannte Aufhängungsachse (7) praktisch horizontal verläuft und praktisch senkrecht zur vertikalen Ebene entlang der Lenkwelle (3) angeordnet ist;
- die Aufhängungsachse (7) aus einem mit Hilfe von pyrotechnischen Verschiebevorrichtungen (41, 42), die von Steuervorrichtungen entsprechend dem Wert gewählter, externer Parameter betätigt werden, entlang seiner Achse beweglichen Halteschaft (32) besteht;
- die Befestigungsachse (5) jeder der beiden Wicklungen (25) aus einem festen Halteschaft (31) besteht.

14. Flexible Energieaufnahmevorrichtung gemäß Anspruch 8, **dadurch gekennzeichnet, dass**:
- das feste Trägerelement (8) aus zwei Befestigungsflächen (51, 52) besteht, die fest mit dem Fahrgestell (10) verbunden sind,
- das bewegliche Trägerelement (9) zwei seitliche Bereiche (53, 54) und einen Anschlussbereich (59) umfasst, wobei jeder seitliche Bereich (55, 56) nach außen in einer beweglichen Befestigungsfläche (55, 56) ausläuft, die mit einer Aufnahme (57, 58) ausgerüstet ist, in die die entsprechende feste Befestigungsfläche (51, 52) des festen Trägerelements (8) eingepasst wird, wobei die bewegliche Befestigungsfläche (55, 56) mit der festen Befestigungsfläche (51, 52) verbunden und mit einem bestimmten Wert blockiert ist, so dass sich die Blockierung im Fall eines Aufpralls löst; die Aufnahme (57, 58) der beweglichen Befestigungsfläche (55, 56) und die feste Befestigungsfläche (51, 52) sind entsprechend angeordnet, um die Montage und die Lösung im Fall eines Aufpralls zu erleichtern;
- eine Wicklung (25) am Ende jedes seitlichen Bereichs (53, 54) angeordnet ist, wobei jede Wicklung (25) zwei Verbindungsachsen (11, 12) aufweist, die senkrecht zueinander angeordnet sind;
- jede Wicklung (25) auf einer Rolle (28) montiert ist, die um die Befestigungsachse (5) angeordnet ist, die die Verbindungsachse (12) zum entsprechenden seitlichen Bereich (53, 54) darstellt, wobei die Befestigungsachse (5) praktisch horizontal verläuft und praktisch senkrecht zur vertikalen Ebene entlang der Lenkwelle angeordnet ist;
- jede Wicklung (25) mit einem geraden Bereich (26) ausgerüstet ist, der praktisch die gleiche Ausrichtung aufweist wie die aufzunehmende Belastung, wobei jeder gerade Bereich (26) in einem freien Ende (27) ausläuft, das um die Aufhängungsachse (7) gebogen ist, das die Verbindungsachse (11) zur entsprechenden festen Befestigungsfläche (51, 52) darstellt, wobei die genannte Aufhängungsachse (7) in vertikaler Ebene angeordnet ist und praktisch senkrecht zur Lenkwelle verläuft;
- die Befestigungsachse (5) aus einem mit Hilfe von pyrotechnischen Verschiebevorrichtungen (43, 44), die mit Hilfe von Steuervorrichtungen entsprechend dem Wert von gewählten, externen Parameter betätigt werden, entlang seiner Achse beweglichen Halteschaft (32) besteht;
- die Aufhängungsachse (7) jeder der beiden Wicklungen (25) aus einem festen Halteschaft (31) besteht.

15. Flexible Energieaufnahmevorrichtung gemäß Anspruch 7, **dadurch gekennzeichnet, dass**:
- das feste Trägerelement (8) aus einer Befestigungsfläche (61) besteht, die fest mit dem Fahrgestell (10) verbunden ist, wobei die genannte Befestigungsfläche (61) auf jeder Seite in einem praktisch vertikalen, seitlichen Bereich (63, 64) verläuft;
- das bewegliche Trägerelement (9) zwei seitliche Bereiche (65, 66) und einen Anschlussbereich (69) umfasst, wobei jeder bewegliche, seitliche Bereich (65, 66) mit einer Aufnahme (67, 68) ausgerüstet ist, in die der entsprechende feste, seitliche Bereich (63, 64) des festen Trägerelements (8) eingepasst wird, wobei der genannte bewegliche, seitliche Bereich (65, 66) mit dem festen, seitlichen Bereich (63, 64) verbunden und mit einem bestimmten Wert blockiert ist, so dass sich die Blockierung im Fall eines Aufpralls löst; die Aufnahme (67, 68) des beweglichen, seitlichen Bereichs (65, 66) und der feste, seitliche Bereich (63, 64) sind entsprechend angeordnet, um die Montage und die Lösung im Fall eines Aufpralls zu erleichtern;
- eine Wicklung (21) außen an jedem festen, seitlichen Bereich (63, 64) angeordnet ist, wobei jede Wicklung (21) zwei Verbindungsachsen (15, 16) aufweist, die parallel zueinander verlaufen;
- jede Wicklung (25) auf einer Rolle (24) montiert ist, die um die Befestigungsachse (5) angeordnet ist, die die Verbindungsachse zum entsprechenden festen, seitlichen Bereich (63, 64) darstellt, wobei die genannte Befestigungsachse (5) praktisch horizontal verläuft und praktisch senkrecht zur vertikalen Ebene entlang der Lenkwelle (3) angeordnet ist;
- jede Wicklung (25) mit einem geraden Bereich (22) ausgerüstet ist, der praktisch die gleiche Ausrichtung aufweist wie die aufzunehmende Belastung, wobei jeder gerade Bereich (22) in einem freien Ende (23) ausläuft, das um die Aufhängungsachse (7) herum gebogen ist, die die Verbindungsachse (16) zum entsprechenden beweglichen, seitlichen Bereich (65, 66) darstellt, wobei die genannte Aufhängungsachse (7) praktisch horizontal verläuft und praktisch senkrecht zur vertikalen Ebene entlang der Lenkwelle angeordnet ist;
- die Aufhängungsachse (7) aus einem mit Hilfe von pyrotechnischen Verschiebevorrichtungen (47, 48), die mit Hilfe von Steuervorrichtungen entsprechend gewählten, externen Parametern betätigt werden, entlang seiner Achse beweglichen Halteschaft (36) besteht;
- die Befestigungsachse (5) jeder der beiden Wicklungen (21) aus einem festen Halteschaft (35) besteht.

16. Flexible Energieaufnahmevorrichtung gemäß Anspruch 7, **dadurch gekennzeichnet, dass**:
- das feste Trägerelement (8) aus einer Befestigungsfläche (61) besteht, die fest mit dem Fahrgestell (10) verbunden ist, wobei die genannte Befestigungsfläche (61) auf jeder Seite in einem seitlichen, praktisch vertikal verlaufenden Bereich (63, 64) endet;
- das bewegliche Trägerelement (9) zwei seitliche Bereiche (65, 66) und einen Anschlussbereich (69) umfasst, wobei jeder bewegliche, seitliche Bereich (65, 66) mit einer Aufnahme (67, 68) ausgerüstet ist, in die der entsprechende feste, seitliche Bereich (63, 64) des festen Trägerelements (8) eingepasst wird, wobei der bewegliche, seitliche Bereich (65, 66) mit dem festen, seitlichen Bereich (63, 64) verbunden und mit einem bestimmten Wert blockiert ist, so dass sich diese Blockierung im Fall eines Aufpralls löst; die Aufnahme (67, 68) des beweglichen, seitlichen Bereichs (65, 66) und der feste, seitliche Bereich (63, 64) sind so angeordnet, dass sie die Montage und die Lösung im Fall eines Aufpralls erleichtern;
- eine Wicklung (21) außen an jedem festen, seitlichen Bereich (63, 64) angeordnet ist, wobei jede Wicklung (21) zwei Verbindungsachsen (15, 16) aufweist, die parallel zueinander verlaufen;
- jede Wicklung (21) auf einer Rolle (24) montiert ist, die um die Befestigungsachse (5) herum montiert ist und die die Verbindungsachse (16) zu dem entsprechenden beweglichen, seitlichen Bereich (65, 66) darstellt, wobei die genannte Befestigungsachse (5) praktisch horizontal verläuft und praktisch senkrecht zur vertikalen Ebene entlang der Lenkwelle angeordnet ist;
- jede Wicklung 821) mit einem geraden Bereich (22) ausgerüstet ist, der praktisch die gleiche Ausrichtung aufweist wie die aufzunehmende Belastung, wobei jeder gerade Bereich (22) in einem freien Ende ausläuft, das um die Aufhängungsachse (7) gebogen ist, die die Verbindungsachse (15) zum entsprechenden festen, seitlichen Bereich (63, 64) darstellt, wobei die genannte Aufhängungsachse (7) praktisch horizontal verläuft und praktisch senkrecht zur vertikalen Ebene entlang der Lenkwelle (3) angeordnet ist;
- die Befestigungsachse (5) aus einem mit Hilfe von pyrotechnischen Verschiebevorrichtungen (47, 48), die mit Hilfe von Steuervorrichtungen entsprechend gewählten, externen Parametern betätigt werden, entlang seiner Achse beweglichen Halteschaft (36) Achse besteht;
- die Aufhängungsachse (7) jeder der beiden Wicklungen (21) aus einem festen Halteschaft (35) besteht.

17. Flexible Energieaufnahmevorrichtung gemäß Anspruch 7, **dadurch gekennzeichnet, dass**:
- das feste Trägerelement (8) aus zwei Befestigungsflächen (51, 52) besteht, die fest mit dem Fahrgestell (10) verbunden sind;
- das bewegliche Trägerelement (9) zwei seitliche Bereiche (53, 54) und einen Anschlussbereich (59) umfasst, wobei jeder seitliche Bereich (53, 54) nach außen in einer beweglichen Befestigungsfläche (55, 56) endet, die mit einer Aufnahme (57, 58) ausgerüstet ist, in die die entsprechende feste Befestigungsfläche (51, 52) des festen Trägerelements (8) eingepasst wird, wobei die genannte bewegliche Befestigungsfläche (55, 56) mit der festen Befestigungsfläche (51, 52) verbunden und mit einem bestimmten Wert blockiert ist, so dass sich diese Blockierung im Fall eines Aufpralls löst; die Aufnahme (57, 58) der beweglichen Befestigungsfläche (55, 56) und die feste Befestigungsfläche sind so angeordnet, dass die Montage und die Lösung im Fall eines Aufpralls erleichtert werden;
- eine Wicklung außen an jedem seitlichen Bereich (53, 54) angeordnet ist, wobei jede Wicklung (21) zwei Verbindungsachsen (13, 14) aufweist, die parallel zueinander verlaufen;
- jede Wicklung (21) auf einer Rolle (24) montiert ist, die um die Befestigungsachse (5) herum angeordnet ist, die die Verbindungsachse (13) zur entsprechenden festen Befestigungsfläche (51, 52) darstellt, wobei die genannte Befestigungsachse (5) in vertikaler Ebene verläuft und praktisch senkrecht zur Lenkwelle angeordnet ist;
- jede Wicklung (21) mit einem geraden Bereich (22) ausgerüstet ist, der praktisch die gleiche Ausrichtung aufweist wie die aufzunehmende Belastung, wobei jeder gerade Bereich (22) in einem freien Ende (23) ausläuft, das um die Aufhängungsachse (7) herum gebogen ist, die die Verbindungsachse (14) zur entsprechenden beweglichen Befestigungsfläche (55, 56) darstellt, wobei die genannte Aufhängungsachse (7) in vertikaler Ebene verläuft und praktisch senkrecht zur Lenkwelle angeordnet ist;
- die Aufhängungsachse (5) aus einem mit Hilfe von pyrotechnischen Verschiebevorrichtungen (45, 46), die von Steuervorrichtungen entsprechend gewählten, externen Parametern betätigt werden, entlang seiner Achse beweglichen Halteschaft (34) besteht;
- die Befestigungsachse (5) jeder der beiden Wicklungen (21) aus einem festen Halteschaft (33) besteht.

18. Flexible Energieaufnahmevorrichtung gemäß Anspruch 7, **dadurch gekennzeichnet, dass**:
- das feste Trägerelement (8) aus zwei Befestigungsflächen (51, 52) besteht, die fest mit dem Fahrgestell (10) verbunden sind;
- das bewegliche Trägerelement (9) zwei seitliche Bereiche (53, 54) und einen Anschlussbereich (59) aufweist, wobei jeder seitliche Bereich (53, 54) außen in einer beweglichen Befestigungsfläche (55, 56) endet, die mit einer Aufnahme (57, 58) ausgerüstet ist, in die die entsprechende feste Befestigungsfläche (51, 52) des festen Trägerelements (8) eingepasst wird, wobei die bewegliche Befestigungsfläche (55, 56) mit der festen Befestigungsfläche (51, 52) verbunden und mit einem bestimmten Wert blockiert ist, so dass sich diese Blockierung im Fall eines Aufpralls löst; die Aufnahme (57, 58) der beweglichen Befestigungsfläche (55, 56) und die feste Befestigungsfläche (51, 52) sind so angeordnet, dass die Montage und die Lösung im Fall eines Aufpralls erleichtert werden;
- eine Wicklung (21) außen an jedem seitlichen Bereich (53, 54) angeordnet ist, wobei jede Wicklung (21) zwei Verbindungsachsen (13, 14) aufweist, die parallel zueinander verlaufen;
- jede Wicklung (21) auf einer Rolle (24) montiert ist, die um die Befestigungsachse (5) herum angeordnet ist, die die Verbindungsachse (14) zur entsprechenden beweglichen Befestigungsfläche (55, 56) darstellt, wobei die genannte Befestigungsachse (5) in der vertikalen Ebene angeordnet ist und praktisch senkrecht zur Lenkwelle (3) verläuft;
- jede Wicklung (21) mit einem geraden Bereich (22) ausgerüstet ist, der praktisch die gleiche Ausrichtung aufweist wie die aufzunehmende Belastung, wobei jeder gerade Bereich (22) in einem freien Ende (23) ausläuft, das um die Aufhängungsachse (7) herum gebogen ist, die die Verbindungsachse (13) zur entsprechenden festen Befestigungsfläche (51, 52) darstellt, wobei die genannte Aufhängungsachse (7) in einer vertikalen Ebene angeordnet ist und praktisch senkrecht zur Lenkwelle (3) verläuft;
- die Befestigungsachse (5) aus einem entlang ihrer Achse mit Hilfe von pyrotechnischen Verschiebevorrichtungen (45, 46), die entsprechend gewählten, externen Parametern von Steuervorrichtungen betätigt werden, entlang seiner Achse beweglichen Halteschaft (34) besteht;
- die Aufhängungsachse (7) jeder der beiden Wicklungen (21) aus einem festen Halteschaft (33) besteht.

## Claims

1. A variable system for absorbing energy from an automobile vehicle steering column which includes:
- a steering shaft (1) rotatably mounted in a body-tube (2) to rotate about a steering axis (3), said body-tube (2) is connected to a support system (6) that is fixed to the chassis (10) of the vehicle,
- a fixed support member (8) that is fastened to the chassis (10) of the vehicle, and a mobile support member (9) that is connected to the fixed support member (8) to constitute the support system (6), the mobile support member (9) is connected to the fixed support member (8) and immobilized thereon up to a particular value so that the immobilization ceases in the event of an impact;
**characterized in that** said variable energy-absorbing system consists in:
- at least one coil (21, 25) of a metallic member with particular section, the coil (21, 25) being connected to the fixed support member (8) and to the mobile support member (9),
- the coil (21, 25) is disposed on one side of a vertical plane passing through the steering axis (3);
- the coil (21, 25) is connected to the fixed support member (8) by its own connecting pin (11, 13, 15) that consists of a retaining rod (31, 33, 35) which is only attributed to this coil (21, 25),
- the coil (21, 25) is connected to the mobile support (9) member by its own connecting pin (12, 14, 16) that consists of a retaining rod (32, 34, 36) which is only attributed to this coil,
- the coil (21, 25) is mounted on its own roller (24, 28) that is disposed on a retaining pin (5) constituting the connecting pin with one of the two support members (8, 9),
- the coil (21, 25) has a rectilinear portion (22, 26) in substantially the same direction as the force to be damped, each rectilinear portion (22, 26) being extended by a free end (23, 27) that is attached to a fastening pin (7) constituting the connecting pin with the other support member (9, 8),
- one of the two connecting pins of the coil (21, 25) consists of a retaining rod (32, 34, 36) that can be moved in the direction of its axis by a pyrotechnic displacement system (41,42 ; 43,44 ; 45,46 ; 47,48) that is actuated by an actuator system,
- so that in the event of an impact, and depending on the value of the parameters adopted:
. the mobile support member (9) is connected to the fixed support member (8) by a required number of coils (21, 25),
. so that the mobile support member (9) connected to the body-tube (2) and therefore to the steering wheel is moved relative to the fixed support member (8) in the direction of the steering axis and absorbs all or some of the energy required to be dissipated.

2. A variable energy-absorbing system according to claim 1, **characterized in that** it comprises:
- two coils (21, 25) of a metal member with a particular section connected to the fixed support member (8) and to the mobile support member (9);
- one of the two coils (21, 25) is disposed on one side of the vertical plane passing through the steering axis (3) and the other coil is disposed on the other side of said vertical plane passing through the steering axis (3).

3. A variable energy-absorbing system according to claim 1, **characterized in that** the pyrotechnic displacement actuator system is adapted so that, in the event of an impact, the mobile support member (9) is connected to the fixed support member (8) by:
- by the coil (21, 25), or
- by no coil
so that the mobile support member (9), which is connected to the body-tube (2), and therefore to the steering wheel, moves relative to the fixed support member (8) by absorbing all or part of the energy required to be dissipated.

4. A variable energy-absorbing system according to claim 2, **characterized in that** the pyrotechnic displacement actuator system is arranged so that, in the event of an impact, the mobile support member (9) is connected to the fixed support member (8) by:
- by the two coils (21, 25), or
- by one of the two coils (21, 25), or
- by the other coil (25, 21), or
- by no coil
so that the mobile support member (9), which is connected to the body-tube (2), and therefore to the steering wheel, moves relative to the fixed support member (8) by absorbing all or part of the energy required to be dissipated.

5. A variable energy-absorbing system according to one of claims 2 and 4, **characterized in that** the retaining pin (5) of each of the two coils (21, 25) is disposed in the fixed support member (8) and the fastening pin (7) of each of the two coils (21, 25) is disposed in the mobile support member (9).

6. A variable energy-absorbing system according to one of claims 2 and 4, **characterized in that** the retaining pin (5) of each of the two coils (21, 25) is disposed in the mobile support member (9) and the fastening pin (7) of each of the two coils (21, 25) is disposed in the fixed support member (8).

7. A variable energy-absorbing system according to any one of preceding claims, **characterized in that** the two connecting pins of each coil (21), that is to say its retaining pin (5) and its fastening pin (7), are substantially parallel to each other.

8. A variable energy-absorbing system according to any one of claims 1 to 6, **characterized in that** the two connecting pins of each coil (25), that is to say its retaining pin (5) and its fastening pin (7), are substantially perpendicular to each other.

9. A variable energy-absorbing system according to claim 7, **characterized in that** the two connecting pins (13, 14) of each of the two coils (21) are in a vertical plane, are substantially parallel to each other and are substantially perpendicular to the steering axis (3).

10. A variable energy-absorbing system according to claim 7, **characterized in that** the two connecting pins (15, 16) of each of the two coils (21) are substantially horizontal and are substantially perpendicular to the vertical plane passing through the steering axis.

11. A variable energy-absorbing system according to claim 8, **characterized in that** the retaining pins (5) of the two coils (25) are each in a vertical plane, are substantially parallel to each other and are substantially perpendicular to the steering axis (3) ; and **in that** the fastening pins (7) of the two coils (25) are substantially horizontal and are substantially perpendicular to the vertical plane passing through the steering axis.

12. A variable energy-absorbing system according to claim 8, **characterized in that** the retaining pins (5) of the two coils (25) are substantially horizontal and are substantially perpendicular to the vertical plane passing through the steering axis (3) ; and **in that** the fastening pins (7) of the two coils are each in a vertical plane, are substantially parallel to each other and are substantially perpendicular to the steering axis (3).

13. A variable energy-absorbing system according to claim 8, **characterized in that**:
- the fixed support member (8) consists of two bases (51, 52) that are fastened to the chassis (10),
- the mobile support member (9) has two lateral portions (53, 54) and a connecting portion (59), each lateral portion (53, 54) is extended toward the outside by a mobile base (55, 56) including a housing (57, 58) in which the corresponding fixed base (51, 52) of the fixed support member (8) is engaged, said mobile base is connected to the fixed base (51, 52) and immobilized therein up to a particular value so that the immobilization ceases in the event of an impact ; the housing (57, 58) of the mobile base (55, 56) and the fixed base (51, 52) are arranged to facilitate assembly and disengagement in the event of an impact ;
- a coil (25) is disposed outside each lateral portion (53, 54), each coil (25) having its two connecting pins (11, 12) mutually perpendicular,
- each coil (25) is mounted on a roller (28) disposed around the retaining pin (5), which constitutes the connecting pin (11) with the corresponding fixed base (51, 52), said retaining pin (5) is substantially in a vertical plane and is substantially perpendicular to the steering axis (3) ;
- each coil (25) has a rectilinear portion (26) in substantially the same direction as the force to be damped, each rectilinear portion (26) being extended by a free end (27) that is curved around the fastening pin (7) which is the connecting pin (12) with the corresponding lateral portion (53, 54), said fastening pin (7) is substantially horizontal, and is substantially perpendicular to the vertical plane passing through the steering axis (3) ;
- the fastening pin (7) consists of a retaining rod (32) that can be moved in the direction of its axis by the pyrotechnic displacement system (41, 42) that is actuated by an actuator system, in accordance with the value of the external parameters adopted ;
- the retaining pin (5) of each of the two coils (25) consists of a fixed retaining rod (31).

14. A variable energy-absorbing system according to claim 8, **characterized in that**:
- the fixed support member (8) consists of two bases (51, 52) that are fastened to the chassis (10),
- the mobile support member (9) has two lateral portions (53, 54) and a connecting portion (59), each lateral portion (53, 54) is extended toward the outside by a mobile base (55, 56) including a housing (57, 58) in which the corresponding fixed base (51, 52) of the fixed support member (8) is engaged, said mobile base (55, 56) is connected to the fixed base (51, 52) and immobilized therein up to a particular value so that the immobilization ceases in the event of an impact, and the housing (57, 58) of the mobile base (55, 56) and the fixed base (51, 52) are arranged to facilitate assembly and disengagement in the event of an impact ;
- a coil (25) is disposed outside each lateral portion (53, 54), each coil (25) having its two connecting pins (11, 12) perpendicular to each other,
- each coil (25) is mounted on a roller (28) disposed around the retaining pin (5), which constitutes the connecting pins (12) with the corresponding lateral portion (53, 54), said retaining pin (5) is substantially horizontal and is substantially perpendicular to the vertical plane passing through steering axis (3) ;
- each coil (25) has a rectilinear portion (26) in substantially the same direction as the force to be damped, each rectilinear portion (26) being extended by a free end (27) that is curved around the fastening pin (7) which is the connecting pin (11) with the corresponding lateral portion (51, 52), said fastening pin (7) is in a vertical plane and is substantially perpendicular to the steering axis ;
- the retaining pin (5) consists of a retaining rod (32) that can be moved in the direction of its axis by the pyrotechnic displacement system (43, 44) that is actuated by an actuator system, in accordance with the value of the external parameters adopted ;
- the fastening pin (7) of each of the two coils (25) consists of a fixed retaining rod (31).

15. A variable energy-absorbing system according to claim 7, **characterized in that**:
- the fixed support member (8) consists of a base (61) that is fastened to the chassis (10), said base (61) being extended on each side by a substantially vertical lateral portion (63, 64) ;
- the mobile support member (9) has two lateral portions (65, 66) and a connection portion (69), each mobile lateral portion (65, 66) includes a housing (67, 68) in which the corresponding fixed lateral portion (63, 64) of the fixed support member (8) is engaged, said mobile lateral portion (65, 66) is connected to the fixed lateral portion (63, 64) and immobilized therein up to a particular value so that the immobilization ceases in the event of an impact ; the housing (67, 68) of the mobile lateral portion (65, 66) and the fixed lateral portion (63, 64) are arranged to facilitate assembly and disengagement in the event of an impact ;
- a coil (21) is disposed outside each fixed lateral portion (63, 64), each coil (21) having its two connecting pins (15, 16) parallel to each other,
- each coil (21) is mounted on a roller (24) disposed around the retaining pin (5), which constitutes the connecting pin (15) with the corresponding the fixed lateral portion (63, 64), said retaining pin (5) is substantially horizontal and is substantially perpendicular to the vertical plane passing through the steering axis (3) ;
- each coil (21) has a rectilinear portion (22) in substantially the same direction as the force to be damped, each rectilinear portion (22) being extended by a free end (23) that is attached to a fastening pin (7) which is the connecting pins (16) with the corresponding lateral portion (65, 66), said fastening pin (7) is substantially horizontal and is substantially perpendicular to the vertical plane passing through the steering axis (3) ;
- the fastening pin (7) consists of a retaining rod (36) that can be moved in the direction of its axis by the pyrotechnic displacement system (47, 48) that is actuated by an actuator system, in accordance with the value of the external parameters adopted ;
- the retaining pin (5) of each of the two coils (21) consists of a fixed retaining rod (35).

16. A variable energy-absorbing system according to claim 7, **characterized in that**:
- the fixed support member (8) consists of a base (61) that is fastened to the chassis (10), said base (61) being extended on each side by a substantially vertical lateral portion (63, 64) ;
- the mobile support member (9) has two lateral portions (65, 66) and a connecting portion (69), each mobile lateral portion (65, 66) includes a housing (67, 68) in which the corresponding fixed lateral portion (63, 64) of the fixed support member (8) is engaged, said mobile lateral portion (65, 66) is connected to the fixed lateral portion (63, 64) and immobilized therein up to a particular value so that the immobilization ceases in the event of an impact ; the housing (67, 68) of the mobile lateral portion (65, 66) and the fixed lateral portion (63, 64) are arranged to facilitate assembly and disengagement in the event of an impact ;
- a coil (21) is disposed outside each fixed lateral portion (63, 64), each coil (21) having its two connecting pins (15, 16) parallel to each other,
- each coil (21) is mounted on a roller (24) disposed around the retaining pin (5), which constitutes the connecting pin (16) with the corresponding mobile lateral portion (65, 66), said retaining pin (5) is substantially horizontal and is substantially perpendicular to the vertical plane passing through the steering axis ;
- each coil (21) has a rectilinear portion (22) in substantially the same direction as the force to be damped, each rectilinear portion (22) being extended by a free end (23) that is curved around the fastening pin (7) which is the connecting pin (15) with the corresponding fixed lateral portion (63, 64), said fastening pin (7) is substantially horizontal, and is substantially perpendicular to the vertical plane passing through the steering axis (3) ;
- the retaining pin (5) consists of a retaining rod (36) that can be moved in the direction of its axis by the pyrotechnic displacement system (47, 48) that is actuated by an actuator system, in accordance with the value of the external parameters adopted ;
- the fastening pin (7) of each of the two coils (21) consists of a fixed retaining rod (35).

17. A variable energy-absorbing system according to claim 7, **characterized in that**:
- the fixed support member (8) consists of two bases (51, 52) that are fastened to the chassis (10),
- the mobile support member (9) has two lateral portions (53, 54) and a connecting portion (59), each lateral portion (53, 54) being extended toward the outside by a mobile base (55, 56) with a housing (57, 58) in which the corresponding fixed base (51, 52) of the fixed support member (8) is engaged, said mobile base (55, 56) is connected to the fixed base (51, 52) and immobilized therein up to a particular value so that the immobilization ceases in the event of an impact, and the housing (57, 58) of the mobile base (55, 56) and the fixed base (51, 52) are arranged to facilitate assembly and disengagement in the event of an impact ;
- a coil (21) is disposed outside each lateral portion (53, 54), each coil (21) having its two connecting pins (13, 14) parallel to each other,
- each coil (21) is mounted on a roller (24) disposed around the retaining pin (5), which constitutes the connecting pins (13) with the corresponding fixed base (51, 52), said retaining pin (5) is in a vertical plane and is substantially perpendicular to the steering axis ;
- each coil (21) has a rectilinear portion (22) in substantially the same direction as the force to be damped, each rectilinear portion (22) being extended by a free end (23) that is curved around the fastening pin (7) which is the connecting pin (14) with the corresponding mobile base (55, 56), said fastening pin (7) is in a vertical plane and is substantially perpendicular to the steering axis ;
- the fastening pin (7) consists of a retaining rod (34) that can be moved in the direction of its axis by the pyrotechnic displacement system (45, 46) that is actuated by an actuator system, in accordance with the value of the external parameters adopted ;
- the retaining pin (5) of each of the two coils (21) consists of a fixed retaining rod (33).

18. A variable energy-absorbing system according to claim 7, **characterized in that**:
- the fixed support member (8) consists of two bases (51, 52) that are fastened to the chassis (10),
- the mobile support member (9) has two lateral portions (53, 54) and a connecting portion (59), each lateral portion (53, 54) being extended toward the outside by a mobile base (55, 56) with a housing (57, 58) in which the corresponding fixed base (51, 52) of the fixed support member (8) is engaged, said mobile base (55, 56) is connected to the fixed base (51, 52) and immobilized therein up to a particular value so that the immobilization ceases in the event of an impact ; the housing (57, 58) of the mobile base (55, 56) and the fixed base (51, 52) are arranged to facilitate assembly and disengagement in the event of an impact ;
- a coil (21) is disposed outside each lateral portion (53, 54), each coil (21) having its two connecting pins (13, 14) parallel to each other,
- each coil (21) is mounted on a roller (24) disposed around the retaining pin (5), which constitutes the connecting pins (14) with the corresponding mobile base (55, 56), said retaining pin (5) is in a vertical plane and is substantially perpendicular to the steering axis (3) ;
- each coil (21) has a rectilinear portion (22) in substantially the same direction as the force to be damped, each rectilinear portion (22) being extended by a free end (23) that is curved around the fastening pin (7) which is the connecting pin (13) with the corresponding fixed base (51, 52), said fastening pin (7) is in a vertical plane and is substantially perpendicular to the steering axis (3) ;
- the retaining pin (5) consists of a retaining rod (34) that can be moved in the direction of its axis by the pyrotechnic displacement system (45, 46) that is actuated by an actuator system, in accordance with the value of the external parameters adopted ;
- the fastening pin (7) of each of the two coils (21) consists of a fixed retaining rod (33).
